# EUROPEAN PATENT APPLICATION

(11) **EP 4 701 274 A1**
(43) Date of publication of application: **25.02.2026**
(21) Application number: 24806409.9
(22) Date of filing: 07.05.2024
(51) Int. Cl.: H04W 48/16

(54) **COMMUNICATION METHOD AND COMMUNICATION APPARATUS**

(30) Priority: 16.05.2023 CN 202310553014
(71) Applicant: Huawei Technologies Co., Ltd., Shenzhen, Guangdong 518129 (CN)
(72) Inventor: HU, Yajie, Shenzhen, Guangdong 518129 (CN)
(74) Representative: Isarpatent
(86) International application number: PCT/CN2024/091450
(87) International publication number: WO 2024/235055

(57) **Abstract**

A communication method and a communication apparatus are provided, and are applied to the field of communication technologies. The method includes: A second edge enabler server EES or an edge enabler client EEC sends first indication information, and correspondingly, an edge configuration server ECS receives the first indication information. The ECS determines, based on the first indication information, an EES corresponding to a target EAS of application context relocation corresponding to an application. According to embodiments of this application, an appropriate EES and an appropriate EAS can be selected for the application, so that better ACR and edge computing services can be provided for the application.

## Description

This application claims priority to Chinese Patent Application No. 202310553014.5, filed with the China National Intellectual Property Administration on May 16, 2023, and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a communication apparatus.

### BACKGROUND

In a running process of an edge application, when a terminal device moves out of a current service area, for example, when a terminal device between edge data networks (edge data network, EDN) moves, or a terminal device between local area data networks (local area data network, LADN) moves, an edge application server (edge application service, EAS) that currently provides a service may be unable to continue serving the currently running application, or an EAS that currently provides a service is no longer an optimal application server that can serve the terminal device, another EAS may be more suitable for serving an application client on the terminal device. Therefore, a new EAS needs to be selected to serve the terminal device. That is, application context information of the terminal device needs to be relocated from the current EAS to the new EAS. This process may be referred to as application context migration or application context relocation (application context relocation, ACR).

In the ACR process, information about a target edge enabler server (edge enabler server, EES) and a target EAS of ACR corresponding to the application can be obtained through an EES and EAS discovery procedure. For example, a source EES or an EEC of the ACR corresponding to the application may first obtain the information about the target EES from an edge configuration server (edge configuration server, ECS), and then obtain the information about the target EAS from the target EES.

Generally, an ECS may be associated with a plurality of EESs, and an EES may be associated with a plurality of EASs. Therefore, how to select an appropriate EES or EAS for an application is an urgent problem to be resolved.

### SUMMARY

Embodiments of this application disclose a communication method and a communication apparatus, so that an appropriate EES and an appropriate EAS can be selected for an application, and better ACR and edge computing services can be provided for the application.

According to a first aspect, an embodiment of this application provides a communication method. The communication method is applied to an ECS, and the method includes:
The ECS receives first indication information, where the first indication information is used to determine a first EES corresponding to a first EAS, and the first EAS is a target EAS of application context relocation ACR corresponding to an application; and the ECS determines the first EES based on the first indication information.

In this embodiment of this application, the first EAS is the target EAS of the ACR corresponding to the application. That is, the first EAS is an EAS to which context information of the application is to be relocated. The first EES is associated with an instantiated EAS, or the first EES is associated with an EAS that is instantiable but not instantiated yet. The first indication information may be from a second EES or an EEC, the second EES is an EES corresponding to an EAS that currently serves the application, and the EEC is an EEC corresponding to the application. The ECS may determine, based on an indication from the second EES or the EEC, that the first EES is associated with an instantiated EAS or an EAS that is instantiable but not instantiated yet, so that the ECS can select an appropriate EES for the application to perform application context relocation, and better ACR and edge computing services can be provided for the UE.

With reference to the first aspect, in a possible implementation, the first indication information includes at least one of the following information: an ACR type corresponding to the application, indication information indicating that the ACR corresponding to the application is ACR for service continuity planning or normal ACR, indication information of an instantiation status of the first EAS, and first time information, and the first time information indicates execution time of the ACR for service continuity planning.

In this embodiment of this application, the ECS may determine, based on the ACR type corresponding to the application, the indication information indicating that the ACR corresponding to the application is ACR for service continuity planning or normal ACR, the indication information of the instantiation status of the first EAS, and the first time information, whether the first EES requires an EAS that is instantiable but not instantiated yet, so that an appropriate EES can be selected for the application for application context relocation, and better ACR and edge computing services can be provided for the application.

With reference to the first aspect, in a possible implementation, that the ECS determines the first EES based on the first indication information includes: The ECS determines the first EES based on the first indication information and at least one of the following: an instantiation status of an EAS associated with at least one EES corresponding to the ECS, and second time information, where the second time information indicates instantiation time of the first EAS.

In this embodiment of this application, the ECS may determine, based on the first indication information, the instantiation status of the target EAS (that is, the first EAS) required for the ACR corresponding to the application. For example, the first indication information includes the first time information, and the ECS may further determine the instantiation status of the first EAS based on the first time information and the second time information. The ECS may select, from the at least one EES based on instantiation status information of the EAS corresponding to the at least one EES, an EES that matches the instantiation status of the first EAS. For example, when the instantiation status of the first EAS is instantiated, the ECS selects an EES corresponding to an instantiated EAS as the first EES. For another example, when the instantiation status of the first EAS is instantiable but not instantiated yet, the ECS selects, as the first EES, an EES corresponding to an EAS that is instantiable but not instantiated yet. With reference to the first indication information, the instantiation status of the EAS associated with the at least one EES corresponding to the ECS, and the second time information, the ECS can select an appropriate target EES for the application to perform ACR, so that better ACR and edge computing services can be provided for a terminal device.

With reference to the first aspect, in a possible implementation, when the ACR type includes a normal ACR type, or the first indication information includes indication information indicating that the ACR corresponding to the application is normal ACR, or the instantiation status of the first EAS includes an instantiated state, the first EES corresponds to an instantiated EAS; or when the ACR type includes an ACR type for service continuity planning, or the first indication information includes indication information indicating that the ACR corresponding to the application is ACR for service continuity planning, or the instantiation status of the first EAS includes an instantiable but not instantiated yet state, the first EES corresponds to an EAS that is instantiable but not instantiated yet.

In this embodiment of this application, when the ACR type includes the normal ACR type, or the first indication information includes the indication information indicating that the ACR corresponding to the application is normal ACR, or the instantiation status of the first EAS includes the instantiated state, the ECS determines that the target EAS required for the ACR corresponding to the application is an instantiated EAS. Therefore, the ECS selects an EES corresponding to an instantiated EAS as the first EES. When the ACR type includes the ACR type for service continuity planning, or the first indication information includes the indication information indicating that the ACR corresponding to the application is ACR for service continuity planning, or the instantiation status of the first EAS includes the instantiable but not instantiated yet state, the ECS determines that the target EAS required for the ACR corresponding to the application is an EAS that is instantiable but not instantiated yet. Therefore, the ECS selects, as the first EES, an EES corresponding to an EAS that is instantiable but not instantiated yet.

In this embodiment of this application, for ACR of the normal ACR type, an instantiated EAS may be selected, so that service interruption time can be reduced. For ACR of the ACR type for service continuity planning, an EAS that is instantiable but not instantiated yet may be selected, and a new EAS is instantiated for an AC, so that an EAS with a better key performance indicator (key performance indicator, KPI) can be provided for the application.

With reference to the first aspect, in a possible implementation, when the execution time of the ACR for service continuity planning is less than the instantiation time of the first EAS, the first EES corresponds to an instantiated EAS; or when the execution time of the ACR for service continuity planning is greater than the instantiation time of the first EAS, the first EES is associated with an EAS that is instantiable but not instantiated yet.

In this embodiment of this application, the execution time of the ACR for service continuity planning may also be referred to as prediction expiration time (prediction expiration time), and indicates time at which a terminal device corresponding to the application reaches an expected location or a service area of the target EAS. For example, the first time information includes first duration, which indicates that the terminal device reaches the expected location or the service area of the target EAS after the first duration. The second time information indicates the instantiation time of the first EAS. That is, the second time information indicates time required for the first EAS to change from an uninstantiated state to the instantiated state. When the execution time of the ACR for service continuity planning is less than the instantiation time of the first EAS, the ECS selects an EES corresponding to an instantiated EAS, that is, the first EES corresponds to an instantiated EAS, so that an increase in ACR latency and time of poor service performance can be avoided. When the execution time of the ACR for service continuity planning is greater than the instantiation time of the EAS, the ECS may select an EEES corresponding to an EAS that is instantiable but not instantiated yet, that is, the first EES corresponds to an EAS that is instantiable but not instantiated yet, and a new EAS is instantiated for the application, so that an EAS with a better KPI can be provided for the application, and better ACR and edge computing services can be provided for the application.

With reference to the first aspect, in a possible implementation, the method further includes:
The ECS sends first information, where the first information includes at least one of the following: information about the at least one EES corresponding to the ECS, instantiation status information of the EAS associated with the at least one EES corresponding to the ECS, and information about the first EES, and the at least one EES includes the first EES.

In this embodiment of this application, after determining the first EES, the ECS may send the information about the first EES to the second EES or the EEC, so that the second EES or the EEC can quickly determine the target EES corresponding to the ACR, and can obtain, from the first EES, the information about the target EAS corresponding to the ACR.

In a possible implementation, after receiving the first indication information, the ECS may determine the at least one EES that matches the application, and send the information about the at least one EES to the second EES or the EEC, so that the second EES or the EEC can determine, based on the information about the at least one EES, the target EES of the ACE corresponding to the application.

With reference to the first aspect, in a possible implementation, the first indication information is from the second EES or the edge enabler client EEC.

According to a second aspect, an embodiment of this application provides a communication method. The method is applied to a second EES, and the method includes:
The second EES sends a first message to a first EES, where the first message is used to obtain information about a first EAS, the first message includes first indication information, the first EAS is a target EAS of application context relocation ACR corresponding to an application, and the first indication information is used to determine the first EAS. The second EES receives a second message from the first EES, where the second message includes information about at least one EAS, and the at least one EAS includes the first EAS.

In this embodiment of this application, the first EAS is the target EAS of the ACR corresponding to the application. That is, the first EAS is an EAS to which context information of the application is to be relocated. The first EAS is an instantiated EAS, or the first EAS is an EAS that is instantiable but not instantiated yet. The second EES is an EES corresponding to an EAS that currently serves the application. That is, the second EES is a source EES of the ACR corresponding to the application. The first EES is a target EES of the ACR corresponding to the application. The second EES may indicate, by using the first indication information, a condition that needs to be satisfied by the target EAS (that is, the first EAS) required by the first EES, so that the first EES can determine, based on the first indication information, whether to select, for the application, an EAS that is instantiable but not instantiated yet. That is, the first EES can select an appropriate EAS for the application to perform application context relocation, so that better ACR and edge computing services can be provided for the application.

With reference to the second aspect, in a possible implementation, the first indication information includes at least one of the following information: an application context relocation ACR type corresponding to the application, indication information indicating that the ACR corresponding to the application is ACR for service continuity planning or normal ACR, indication information of an instantiation status of the first EAS, and first time information, and the first time information indicates execution time of the ACR for service continuity planning.

In this embodiment of this application, the first indication information includes the ACR type corresponding to the application, the indication information indicating that the ACR corresponding to the application is ACR for service continuity planning or normal ACR, the indication information of the instantiation status of the first EAS, and the first time information, so that the first EES can select, with reference to the ACR type corresponding to the application, the indication information indicating that the ACR corresponding to the application is ACR for service continuity planning or normal ACR, the indication information of the instantiation status of the first EAS, and the first time information, an appropriate EAS for the application to perform application context relocation, so that better ACR and edge computing services can be provided for the application.

With reference to the second aspect, in a possible implementation, the method further includes:
The second EES determines the first EAS from the at least one EAS based on at least one of the following information: the ACR type, instantiation status information of the first EAS, and the information about the at least one EAS.

In this embodiment of this application, the second EES may determine the first EAS from the at least one EAS based on the ACR type and the information about the at least one EAS, or the second EES may determine the first EAS from the at least one EAS based on the instantiation status information of the first EAS and the information about the at least one EAS. For example, the second EES may determine the instantiation status of the first EAS based on the ACR type, and then select, from the at least one EAS, an EAS that matches the instantiation status of the first EAS. For example, when the instantiation status of the first EAS is instantiated, the second EES selects an instantiated EAS as the first EAS. For another example, when the instantiation status of the first EAS is instantiable but not instantiated yet, the second EES selects, as the first EAS, an EAS that is instantiable but not instantiated yet.

In this embodiment of this application, the second EES selects the target EAS corresponding to the ACR for the application with reference to the ACR type, the instantiation status information of the first EAS, and the information about at least one EAS, so that an appropriate target EAS can be selected for the application to perform ACR, and better ACR and edge computing services can be provided for a terminal device.

With reference to the second aspect, in a possible implementation, the information about the first EAS includes second time information, the second time information indicates instantiation time of the first EAS, and the method further includes:
The second EES determines the first EAS from the at least one EAS based on the first time information and/or the second time information.

In this embodiment of this application, the execution time of the ACR for service continuity planning may also be referred to as prediction expiration time (prediction expiration time), and indicates time at which a terminal device corresponding to the application reaches an expected location or a service area of the target EAS. For example, the first time information includes first duration, which indicates that the terminal device reaches the expected location or the service area of the target EAS after the first duration. The second time information indicates the instantiation time of the first EAS. That is, the second time information indicates time required for the first EAS to change from an uninstantiated state to the instantiated state. The second EES determines the first EAS with reference to the first time information and the second time information, so that an appropriate EAS can be selected for the application to reduce service interruption time, and better ACR and edge computing services can be provided for the terminal device.

For example, when the execution time of the ACR for service continuity planning is less than the instantiation time of the first EAS, the second EES selects an instantiated EAS as the first EAS, that is, the first EES corresponds to an instantiated EAS, so that an increase in ACR latency and time of poor service performance can be avoided. When the execution time of the ACR for service continuity planning is greater than the instantiation time of the EAS, the second EES may select, as the first EAS, an EAS that is instantiable but not instantiated yet, that is, the first EES corresponds to an EAS that is instantiable but not instantiated yet, and a new EAS is instantiated for the application, so that an EAS with a better KPI can be provided for the application, and better ACR and edge computing services can be provided for the application.

With reference to the second aspect, in a possible implementation, the method further includes:
The second EES sends a third message to an edge configuration server ECS, where the third message includes at least one of the following information: the first indication information and application information. The second EES receives first information from the ECS, where the first information includes at least one of the following information: information about at least one EES, instantiation status information of an EAS corresponding to the at least one EES, and instantiation time information of the EAS corresponding to the at least one EES, and the at least one EES includes the first EES.

In this embodiment of this application, the first indication information or the application information is used to determine whether the target EES (that is, the first EES) of the ACR corresponding to the application requires an EAS that is instantiable but not instantiated yet. The first indication information or the application information can indicate the ECS to select an appropriate target EES for the application, so that better ACR and edge computing services can be provided for the application.

With reference to the second aspect, in a possible implementation, the method further includes:
The second EES determines the first EES from the at least one EES based on at least one of the application information, the first indication information, the information about the at least one EES, and the instantiation status information of the EAS corresponding to the at least one EES.

In this embodiment of this application, the second EES can select an appropriate EES as the target EES of the ACR with reference to the application information, the first indication information, the information about the at least one EES, and the instantiation status information of the EAS corresponding to the at least one EES, so that better ACR and edge computing services can be provided for the application.

With reference to the second aspect, in a possible implementation, the method further includes:
The second EES determines the instantiation status corresponding to the first EAS based on the ACR type corresponding to the application, where the instantiation status of the first EAS includes an instantiated state, or the instantiation status of the first EAS includes an instantiable but not instantiated yet state.

In this embodiment of this application, the second EES determines the instantiation status corresponding to the first EAS based on the ACR type corresponding to the application. That is, the second EES determines, based on the ACR type, that the first EAS is an instantiated EAS, or the first EAS is an EAS that is instantiable but not instantiated yet. The second EES determines the instantiation status of the first EAS based on the ACR type, so that the target EAS of the ACR corresponding to the application can match the ACR type, and better ACR and edge computing services can be provided for the application.

With reference to the second aspect, in a possible implementation, the ACR type includes a normal ACR type, and the instantiation status of the first EAS includes the instantiated state; or the ACR type includes an ACR type for service continuity planning, and the instantiation status of the first EAS includes the instantiable but not instantiated yet state.

In this embodiment of this application, for ACR of the normal ACR type, an instantiated EAS may be selected as the first EAS, so that service interruption time can be reduced. For ACR of the ACR type for service continuity planning, an EAS that is instantiable but not instantiated yet may be selected as the first EAS, and a new EAS may be instantiated for the AC, so that an EAS with a better KPI can be provided for the application.

With reference to the second aspect, in a possible implementation, the information about the first EAS includes at least one of the instantiation status information of the first EAS, identification information of the first EAS, and endpoint of the first EAS.

According to a third aspect, an embodiment of this application provides a communication method. The method is applied to an EEC, and the method includes:
The EEC sends a first message to a first EES, where the first message is used to obtain information about a first EAS or report the information about the first EAS, the first EAS is a target EAS of application context relocation ACR corresponding to an application, the first message includes first indication information, and the first indication information is used to determine the first EAS. The EEC receives a second message from the first EES, where the second message includes information about at least one EAS, and the information about the at least one EAS includes the information about the first EAS.

In this embodiment of this application, the first EAS is the target EAS of the ACR corresponding to the application. That is, the first EAS is an EAS to which context information of the application is to be relocated. The first EAS is an instantiated EAS, or the first EAS is an EAS that is instantiable but not instantiated yet. The EEC is an EEC corresponding to the application. The first EES is a target EES of the ACR corresponding to the application. The EEC may indicate, by using the first indication information, a condition that needs to be satisfied by the target EAS (that is, the first EAS) required for the first EESACR, so that the first EES can determine, based on the first indication information, whether to select, for the application, an EAS that is instantiable but not instantiated yet. That is, the first EES can select an appropriate EAS for the application to perform application context relocation, so that better ACR and edge computing services can be provided for the application.

With reference to the third aspect, in a possible implementation, the first indication information includes at least one of the following information: an application context relocation ACR type corresponding to the application, indication information indicating that the ACR corresponding to the application is ACR for service continuity planning or normal ACR, indication information of an instantiation status of the first EAS, and first time information, and the first time information indicates execution time of the ACR for service continuity planning.

In this embodiment of this application, the first indication information includes the ACR type corresponding to the application, the indication information indicating that the ACR corresponding to the application is ACR for service continuity planning or normal ACR, the indication information of the instantiation status of the first EAS, and the first time information, so that the first EES can select, with reference to the ACR type corresponding to the application, the indication information indicating that the ACR corresponding to the application is ACR for service continuity planning or normal ACR, the indication information of the instantiation status of the first EAS, and the first time information, an appropriate EAS for the application to perform application context relocation, so that better ACR and edge computing services can be provided for the application.

With reference to the third aspect, in a possible implementation, the method further includes:
The EEC determines the first EAS from the at least one EAS based on at least one of the following information: the ACR type, instantiation status information of the first EAS, and the information about the at least one EAS.

In this embodiment of this application, the EEC may determine the first EAS from the at least one EAS based on the ACR type and the information about the at least one EAS, or the EEC may determine the first EAS from the at least one EAS based on the instantiation status information of the first EAS and the information about the at least one EAS. For example, the EEC may determine the instantiation status of the first EAS based on the ACR type, and then select, from the at least one EAS, an EAS that matches the instantiation status of the first EAS. For example, when the instantiation status of the first EAS is instantiated, the EEC selects an instantiated EAS as the first EAS. For another example, when the instantiation status of the first EAS is instantiable but not instantiated yet, the EEC selects, as the first EAS, an EAS that is instantiable but not instantiated yet.

In this embodiment of this application, the EEC selects the target EAS corresponding to the ACR for the application with reference to the ACR type, the instantiation status information of the first EAS, and the information about at least one EAS, so that an appropriate target EAS can be selected for the application to perform ACR, and better ACR and edge computing services can be provided for a terminal device.

With reference to the third aspect, in a possible implementation, information about the first EAS includes second time information, the second time information indicates instantiation time of the first EAS, and the method further includes:
The EEC determines the first EAS from the at least one EAS based on the first time information and/or the second time information.

In this embodiment of this application, the execution time of the ACR for service continuity planning may also be referred to as prediction expiration time (prediction expiration time), and indicates time at which a terminal device corresponding to the application reaches an expected location or a service area of the target EAS. For example, the first time information includes first duration, which indicates that the terminal device reaches the expected location or the service area of the target EAS after the first duration. The second time information indicates the instantiation time of the first EAS. That is, the second time information indicates time required for the first EAS to change from an uninstantiated state to the instantiated state. The EEC determines the first EAS with reference to the first time information and the second time information, so that an appropriate EAS can be selected for the application to reduce service interruption time, and better ACR and edge computing services can be provided for the terminal device.

For example, when the execution time of the ACR for service continuity planning is less than the instantiation time of the first EAS, the EEC selects an instantiated EAS as the first EAS, that is, the first EES corresponds to an instantiated EAS, so that an increase in ACR latency and time of poor service performance can be avoided. When the execution time of the ACR for service continuity planning is greater than the instantiation time of the EAS, the EEC may select, as the first EAS, an EAS that is instantiable but not instantiated yet, that is, the first EES corresponds to an EAS that is instantiable but not instantiated yet, and a new EAS is instantiated for the application, so that an EAS with a better KPI can be provided for the application, and better ACR and edge computing services can be provided for the application.

With reference to the third aspect, in a possible implementation, the method further includes:
The EEC sends a third message to an edge configuration server ECS, where the third message includes at least one of the following information: the first indication information and application information. The EEC receives first information from the ECS, where the first information includes at least one of the following information: information about at least one EES, instantiation status information of an EAS corresponding to the at least one EES, and instantiation time information of the EAS corresponding to the at least one EES, and the at least one EES includes the first EES.

In this embodiment of this application, the first indication information or the application information is used to determine whether the target EES (that is, the first EES) of the ACR corresponding to the application requires an EAS that is instantiable but not instantiated yet. The first indication information or the application information can indicate the ECS to select an appropriate target EES for the application, so that better ACR and edge computing services can be provided for the application.

With reference to the third aspect, in a possible implementation, the method further includes:
The EEC determines the first EES from the at least one EES based on at least one of the application information, the first indication information, the information about the at least one EES, and the instantiation status information of the EAS corresponding to the at least one EES.

In this embodiment of this application, the EEC can select an appropriate EES as the target EES of the ACR with reference to the application information, the first indication information, the information about the at least one EES, and the instantiation status information of the EAS corresponding to the at least one EES, so that better ACR and edge computing services can be provided for the application.

With reference to the third aspect, in a possible implementation, the method further includes:
The EEC determines the instantiation status corresponding to the first EAS based on the ACR type corresponding to the application, where the instantiation status of the first EAS includes an instantiated state, or the instantiation status of the first EAS includes an instantiable but not instantiated yet state.

In this embodiment of this application, the EEC determines the instantiation status corresponding to the first EAS based on the ACR type corresponding to the application. That is, the EEC determines, based on the ACR type, that the first EAS is an instantiated EAS, or the first EAS is an EAS that is instantiable but not instantiated yet. The EEC determines the instantiation status of the first EAS based on the ACR type, so that the target EAS of the ACR corresponding to the application can match the ACR type, and better ACR and edge computing services can be provided for the application.

With reference to the third aspect, in a possible implementation, the ACR type includes a normal ACR type, and the instantiation status of the first EAS includes the instantiated state; or the ACR type includes an ACR type for service continuity planning, and the instantiation status of the first EAS includes the instantiable but not instantiated yet state.

In this embodiment of this application, for ACR of the normal ACR type, an instantiated EAS may be selected as the first EAS, so that service interruption time can be reduced. For ACR of the ACR type for service continuity planning, an EAS that is instantiable but not instantiated yet may be selected as the first EAS, and a new EAS may be instantiated for the AC, so that an EAS with a better KPI can be provided for the application.

According to a fourth aspect, an embodiment of this application provides a communication method. The method is applied to a first EES, and the method includes:
The first EES receives a first message, where the first message is used to request information about a first EAS, the first message includes first indication information, the first indication information is used to determine the first EAS, and the first EAS is a target EAS of an application context relocation ACR corresponding to an application. The first EES sends a second message, where the second message includes information about at least one EAS, and the information about the at least one EAS includes the information about the first EAS.

In this embodiment of this application, the first EES is a target EES of the ACR corresponding to the application, and the first EAS is the target EAS of the ACR corresponding to the application. That is, the first EAS is an EAS to which context information of the application is to be relocated. The first EAS is an instantiated EAS, or the first EAS is an EAS that is instantiable but not instantiated yet. The first EES may determine, by using the first indication information, a condition that needs to be satisfied by the target EAS (that is, the first EAS) required for the ACR, so that the first EES can determine, based on the first indication information, whether to select, for the application, an EAS that is instantiable but not instantiated yet. That is, the first EES can select an appropriate EAS for the application to perform application context relocation, so that better ACR and edge computing services can be provided for the application.

With reference to the fourth aspect, in a possible implementation, the first indication information includes at least one of the following information: an application context relocation ACR type corresponding to the application, indication information indicating that the ACR corresponding to the application is ACR for service continuity planning or normal ACR, indication information of an instantiation status of the first EAS, and first time information, and the first time information indicates execution time of the ACR for service continuity planning.

In this embodiment of this application, the first indication information includes the ACR type corresponding to the application, the indication information indicating that the ACR corresponding to the application is ACR for service continuity planning or normal ACR, the indication information of the instantiation status of the first EAS, and the first time information, so that the first EES can select, with reference to the ACR type corresponding to the application, the indication information indicating that the ACR corresponding to the application is ACR for service continuity planning or normal ACR, the indication information of the instantiation status of the first EAS, and the first time information, an appropriate EAS for the application to perform application context relocation, so that better ACR and edge computing services can be provided for the application.

With reference to the fourth aspect, in a possible implementation, the first EES determines the first EAS based on the first indication information, where the instantiation status of the first EAS includes an instantiated state, or the instantiation status of the first EAS includes an instantiable but not instantiated yet state.

In this embodiment of this application, the first EES may determine, based on the first indication information, that the first EAS is an instantiated EAS, or the first EAS is an EAS that is instantiable but not instantiated yet. That is, the first EES can determine, based on the first indication information, whether to select, for the application, an EAS that is instantiable but not instantiated yet. That is, the first EES can select an appropriate EAS for the application to perform application context relocation, so that better ACR and edge computing services can be provided for the application.

With reference to the fourth aspect, in a possible implementation, when the ACR type includes a normal ACR type, or the first indication information includes indication information indicating that the ACR corresponding to the application is normal ACR, or the instantiation status of the first EAS includes an instantiated state, the first EAS includes an instantiated EAS; or when the ACR type includes an ACR type for service continuity planning, or the first indication information includes indication information indicating that the ACR corresponding to the application is ACR for service continuity planning, or the instantiation status of the first EAS includes an instantiable but not instantiated yet state, the first EAS includes an EAS that is instantiable but not instantiated yet.

In this embodiment of this application, when the ACR type includes the normal ACR type, or the first indication information includes the indication information indicating that the ACR corresponding to the application is normal ACR, or the instantiation status of the first EAS includes the instantiated state, the first EES determines that the target EAS required for the ACR corresponding to the application is an instantiated EAS. That is, the first EAS includes the instantiated EAS. When the ACR type includes the ACR type for service continuity planning, or the first indication information includes the indication information indicating that the ACR corresponding to the application is ACR for service continuity planning, or the instantiation status of the first EAS includes the instantiable but not instantiated yet state, the first EES determines that the target EAS required for the ACR corresponding to the application is an EAS that is instantiable but not instantiated yet. That is, the first EAS includes an EAS that is instantiable but not instantiated yet. For ACR of the normal ACR type, an instantiated EAS may be selected, so that service interruption time can be reduced. For ACR of the ACR type for service continuity planning, an EAS that is instantiable but not instantiated yet may be selected, and a new EAS may be instantiated for the AC, so that an EAS with a better KPI can be provided for the application.

With reference to the fourth aspect, in a possible implementation, the first indication information includes the first time information, and that the first EES determines the first EAS based on the first indication information includes:
The first EES determines the first EAS based on the first time information and second time information, where the second time information indicates instantiation time of the first EAS, and the instantiation status of the first EAS includes the instantiated state, or the instantiation status of the first EAS includes the instantiable but not instantiated yet state.

In this embodiment of this application, the execution time of the ACR for service continuity planning may also be referred to as prediction expiration time (prediction expiration time), and indicates time at which a terminal device corresponding to the application reaches an expected location or a service area of the target EAS. For example, the first time information includes first duration, which indicates that the terminal device reaches the expected location or the service area of the target EAS after the first duration. The second time information indicates the instantiation time of the first EAS. That is, the second time information indicates time required for the first EAS to change from an uninstantiated state to the instantiated state. The first EES determines the first EAS with reference to the first time information and the second time information, so that an appropriate EAS can be selected for the application to reduce service interruption time, and better ACR and edge computing services can be provided for the terminal device.

With reference to the fourth aspect, in a possible implementation, when the execution time of the ACR for service continuity planning is less than the instantiation time of the first EAS, the instantiation status of the first EAS includes the instantiated state; or when the execution time of the ACR for service continuity planning is greater than the instantiation time of the first EAS, the instantiation status of the first EAS includes the instantiable but not instantiated yet state.

In this embodiment of this application, when the execution time of the ACR for service continuity planning is less than the instantiation time of the first EAS, the first EES selects an instantiated EAS as the first EAS. That is, the instantiation status of the first EAS includes the instantiated state, so that an increase in ACR latency and time of poor service performance can be avoided. When the execution time of the ACR for service continuity planning is greater than the instantiation time of the EAS, the first EES may select, as the first EAS, an EAS that is instantiable but not instantiated yet, that is, the instantiation status of the first EAS includes the instantiable but not instantiated yet state, and a new EAS is instantiated for the application, so that an EAS with a better KPI can be provided for the application, and better ACR and edge computing services can be provided for the application.

With reference to the fourth aspect, in a possible implementation, the first message is from a second EES or an edge enabler client EEC, and that the first EES sends the second message includes:
The first EES sends the second message to the second EES or the EEC.

With reference to the fourth aspect, in a possible implementation, the method further includes:
When the instantiation status corresponding to the first EAS includes the instantiable but not instantiated yet state, the first EES triggers an instantiation procedure for the first EAS to a network management system.

In this embodiment of this application, when the instantiation status corresponding to the first EAS includes the instantiable but not instantiated yet state, the first EES triggers the instantiation procedure for the first EAS to the network management system, to instantiate a new EAS for the application, so that an EAS with a better KPI can be provided for the application.

According to a fifth aspect, an embodiment of this application provides a communication apparatus, configured to perform the method in any one of the first aspect or the possible implementations of the first aspect. The communication apparatus includes a unit for performing the method in any one of the first aspect or the possible implementations of the first aspect.

According to a sixth aspect, an embodiment of this application provides a communication apparatus, configured to perform the method in any one of the second aspect or the possible implementations of the second aspect. The communication apparatus includes a unit for performing the method in any one of the second aspect or the possible implementations of the second aspect.

According to a seventh aspect, an embodiment of this application provides a communication apparatus, configured to perform the method in any one of the third aspect or the possible implementations of the third aspect. The communication apparatus includes a unit for performing the method in any one of the third aspect or the possible implementations of the third aspect.

According to an eighth aspect, an embodiment of this application provides a communication apparatus, configured to perform the method in any one of the fourth aspect or the possible implementations of the fourth aspect. The communication apparatus includes a unit for performing the method in any one of the fourth aspect or the possible implementations of the fourth aspect.

In the fifth aspect to the eighth aspect, the communication apparatuses may include a transceiver unit and a processing unit.

According to a ninth aspect, an embodiment of this application provides a communication apparatus. The communication apparatus includes a processor, configured to perform the method according to any one of the first aspect to the fourth aspect or any possible implementation. Alternatively, the processor is configured to execute a program stored in the memory. When the program is executed, the method according to any one of the first aspect to the fourth aspect or any possible implementation is performed.

In a possible implementation, the memory is located outside the communication apparatus.

In a possible implementation, the memory is located in the communication apparatus.

In this embodiment of this application, the processor and the memory may alternatively be integrated into one device. In other words, the processor and the memory may alternatively be integrated together.

In a possible implementation, the communication apparatus further includes a transceiver. The transceiver is configured to receive a signal or transmit a signal.

According to a tenth aspect, an embodiment of this application provides a communication apparatus. The communication apparatus includes a logic circuit and an interface, the logic circuit is coupled to the interface, the interface is configured to receive first indication information, and the logic circuit is configured to determine a first EES.

It may be understood that, for the communication apparatus according to the tenth aspect, refer to the first aspect or the following specific implementations.

According to an eleventh aspect, an embodiment of this application provides a communication apparatus. The communication apparatus includes a logic circuit and an interface. The logic circuit is coupled to the interface. The interface is configured to output a first message and receive a second message.

It may be understood that, for the communication apparatus according to the eleventh aspect, refer to the second aspect or the following specific implementations.

According to a twelfth aspect, an embodiment of this application provides a communication apparatus. The communication apparatus includes a logic circuit and an interface. The logic circuit is coupled to the interface. The interface is configured to output a first message and receive a second message.

It may be understood that, for the communication apparatus according to the twelfth aspect, refer to the third aspect or the following specific implementations.

According to a thirteenth aspect, an embodiment of this application provides a communication apparatus. The communication apparatus includes a logic circuit and an interface. The logic circuit is coupled to the interface. The interface is configured to input a first message and output a second message.

It may be understood that, for the communication apparatus according to the thirteenth aspect, refer to the fourth aspect or the following specific implementations.

According to a fourteenth aspect, an embodiment of this application provides a computer-readable storage medium. The computer-readable storage medium is configured to store a computer program. When the computer program is run on a computer, the method according to any one of the first aspect to the fourth aspect or any possible implementation is performed.

According to a fifteenth aspect, an embodiment of this application provides a computer program product. The computer program product includes a computer program. When the computer program product runs on a computer, the method according to any one of the first aspect to the fourth aspect or any possible implementation is performed.

According to a sixteenth aspect, an embodiment of this application provides a computer program. When the computer program is run on a computer, the method according to any one of the first aspect to the fourth aspect or any possible implementation is performed.

According to a seventeenth aspect, an embodiment of this application provides a communication system. The communication system includes at least two of the following: an ECS, a first EES, a second EES, or an EEC. The ECS is configured to perform the method according to any one of the first aspect or the possible implementations of the first aspect, the second EES is configured to perform the method according to any one of the second aspect or the possible implementations of the second aspect, the EEC is configured to perform the method according to any one of the third aspect or the possible implementations of the third aspect, and the first EES is configured to perform the method according to any one of the fourth aspect or the possible implementations of the fourth aspect.

### BRIEF DESCRIPTION OF DRAWINGS

The following describes the accompanying drawings in embodiments of this application.
FIG. 1 is a diagram of a system architecture according to an embodiment of this application;
FIG. 2 is a schematic flowchart of ACR according to an embodiment of this application;
FIG. 3 is a schematic flowchart of instantiating an EAS according to an embodiment of this application;
FIG. 4A is an interaction diagram of a communication method according to an embodiment of this application;
FIG. 4B is an interaction diagram of another communication method according to an embodiment of this application;
FIG. 5A is an interaction diagram of still another communication method according to an embodiment of this application;
FIG. 5B is an interaction diagram of still another communication method according to an embodiment of this application;
FIG. 6 is an interaction diagram of still another communication method according to an embodiment of this application;
FIG. 7 is an interaction diagram of still another communication method according to an embodiment of this application;
FIG. 8 is an interaction diagram of still another communication method according to an embodiment of this application;
FIG. 9 is an interaction diagram of still another communication method according to an embodiment of this application;
FIG. 10 is an interaction diagram of still another communication method according to an embodiment of this application;
FIG. 11 is a diagram of a structure of a communication apparatus according to an embodiment of this application;
FIG. 12 is a diagram of a structure of a communication apparatus according to an embodiment of this application; and
FIG. 13 is a diagram of a structure of a communication apparatus according to an embodiment of this application.

### DESCRIPTION OF EMBODIMENTS

In the specification, claims, and accompanying drawings of this application, the terms "first", "second", and the like are merely intended to distinguish between different objects, but are not intended to limit sequences, time sequences, priorities, or importance degrees of a plurality of objects. In embodiments of this application, "a plurality of" means two or more. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices. In addition, the character "/" generally indicates an "or" relationship between the associated objects.

"Embodiment" in this specification means that a particular feature, structure, or characteristic described with reference to the embodiment may be included in at least one embodiment of this application. The term shown in various locations in the specification may not necessarily refer to a same embodiment, and is not an independent or optional embodiment exclusive from another embodiment. It may be understood explicitly and implicitly by a person skilled in the art that embodiments described in this specification may be combined with another embodiment.

The following describes technical solutions of this application with reference to accompanying drawings.

The technical solutions of embodiments of this application may be applied to various communication systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, or new radio (new radio, NR).

A terminal device in embodiments of this application may be a user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in a future evolved public land mobile network (public land mobile network, PLMN), or the like. This is not limited in embodiments of this application.

A network device in embodiments of this application may be a device configured to communicate with the terminal device. The network device may be a base transceiver station (base transceiver station, BTS) in the global system for mobile communications (global system for mobile communications, GSM) or code division multiple access (code division multiple access, CDMA), may be a NodeB (NodeB, NB) in a wideband code division multiple access (wideband code division multiple access, WCDMA) system, may be an evolved NodeB (evolved NodeB, eNB or eNodeB) in the LTE system, or may be a radio controller in a scenario of a cloud radio access network (cloud radio access network, CRAN). Alternatively, the network device may be a relay station, an access point, a vehicle-mounted device, a wearable device, a network device in the 5G network, a network device in the evolved PLMN, or the like. This is not limited in embodiments of this application.

The following briefly describes related technical terms in embodiments of this application.

Multi-access edge computing (multi-access edge computing, MEC): The MEC is cloud computing at an edge of a network, in which computing power is deployed closer to a user, to reduce network latency and provide computing power and applications for a user nearby, thereby greatly improving service experience. The MEC may nearby provide, by using a radio access network, a telecommunication user with a service and a cloud computing function required by an information technology (information technology, IT), to create a carrier-class service environment with high performance, low latency, and high bandwidth, accelerate fast downloading of content, services, and applications in the network, and enable the user to have experience of an uninterrupted high-quality network.

Data network (data network, DN): The data network is a service network of an operator or a third party, and may provide a service for a terminal device, for example, an operator service or an internet service.

Local data network (local DN): The local data network is an access point (access point) of a data network that is very close to an attachment point (attachment point) of a user.

Application context: The application context is running status information related to one user or a group of users. Optionally, the application context may further include a context of subscription of the one or more users to a core network in a source application instance or an edge application server (edge application server, EAS), for example, a transaction identifier of subscription. Optionally, the application context may further include a context of the one or more users on an edge enabler server (edge enabler server, EES), for example, a transaction identifier of subscription of the one or more users to the source EAS.

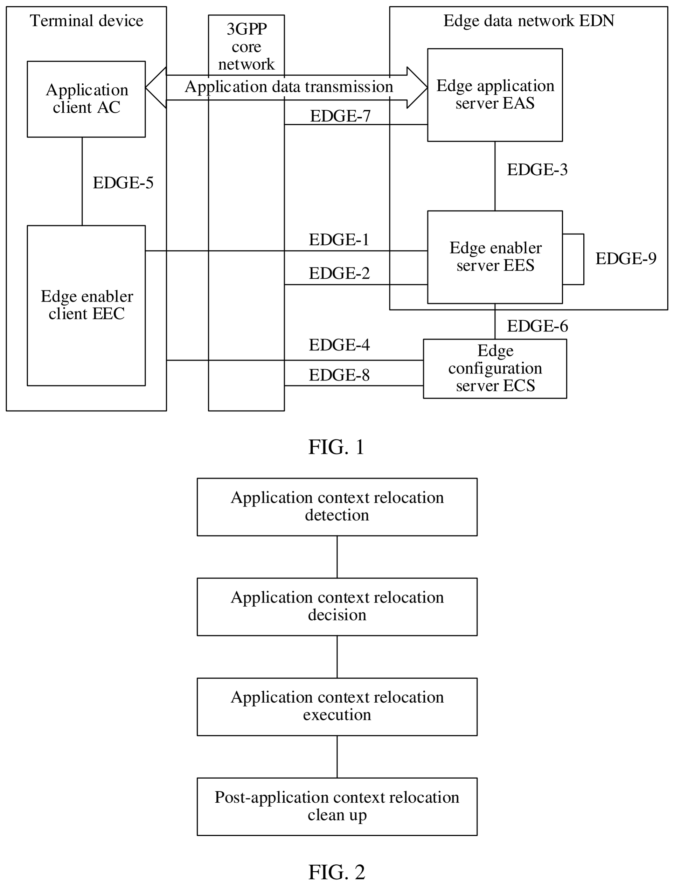

FIG. 1 is a diagram of a system architecture according to an embodiment of this application. The following briefly describes functional entities and interfaces in FIG. 1.

Edge data network (edge data network, EDN): In a possible implementation, the EDN corresponds to a data network, is a special local data network (local DN), may include an edge enabler function, may use a data network access identifier (data network access identifier, DNAI) and a data network name (data network name, DNN) identifier, and is a network logical concept. In another possible implementation, the EDN is an equivalent concept of a center cloud, and may be understood as a local data center (a geographical location concept), may be identified by using a DNAI, and may include a plurality of local data networks.

Application instance or edge application server (edge application server, EAS): An edge application is an application deployed on an edge data network. Specifically, the edge application may be an instance (instance) deployed and running for a server application (for example, social media software, augmented reality (augmented reality, AR), or virtual reality (virtual reality, VR)) on the EDN. One or more EASs may be deployed for one application in one or more ENDs. EASs deployed and running on different EDNs may be considered as different EASs of one application. The EASs may share one domain name, and may use one IP address or different IP addresses. For example, the EAS may also be referred to as an edge application server, an application instance, an edge application instance, an MEC application server, or an EAS function.

Application client (application client, AC): The application client is a peer entity of an edge application on a terminal device. The application client is used by an application user (user) to obtain an application service from an edge application EAS. The application client is a client program of the application on the terminal device side. The application client may be connected to an application server on a cloud to obtain the application service, or may be connected to an edge application EAS deployed and running on one or more EDNs to obtain the application service.

Edge enabler server (edge enabler server, EES): The edge enabler server EES may provide some enabling capabilities for an edge application EAS deployed in an EDN, to better support deployment of an edge application in MEC. For example, the EES may support EAS registration, authentication and authorization on a terminal device, and provide IP address information of the EAS for the terminal device. For example, the EES may further support obtaining an identifier and the IP address information of the EAS, and further send the identifier and the IP address information of the EAS to a configuration server of an edge data network. For example, the EES may be deployed on the EDN. Generally, the EAS is registered with one EES, or information about one EAS is configured in one EES via a management system. The EES is referred to as an EES associated with the EAS. The EES controls or manages the EAS that is registered with or configured in the EES. That is, an EAS associated with the EES indicates an EAS registered with the EES or an EAS managed by the EES. The EES can obtain EAS information from a network management system or through pre-configuration.

An edge enabler client (edge enabler client, EEC): The EEC is a peer entity of an EES on a terminal device side. The EEC is used to register information about the EEC and information about an application client with the EES, perform security authentication and authorization, obtain an IP address of an EAS from the EES, and provide an edge computing enabling capability for the application client. For example, the EAS discovers a service and returns the IP address of the EAS to the application client.

In this embodiment of this application, one terminal device may include one or more EECs or ACs. It should be understood that in embodiments of this application, an EEC and a terminal device may be replaced with each other in some cases.

Edge configuration server (edge configuration server, ECS): The ECS is responsible for configuration of an EDN. For example, the ECS may provide information about an EES for a terminal device, may further provide information about an EAS for the terminal device, and interact with a DNS of an application to obtain the information about the EAS. For example, the ECS may further obtain and store the information about the EAS and an IP address from another functional entity.

For example, an application user signs a service agreement with an application provider, to provide services for the application user. The application user logs in to an application client on a terminal device and communicates with the EAS via the application client. An edge enabler client is a middleware layer, and may be located in an operating system, or located between the application client and the operating system. The application client may obtain an edge enabler service from the edge enabler client through an application programming interface (application programming interface, API).

For example, in a running process of an edge application, when a terminal device moves out of a current service area, for example, a terminal device between edge data networks (edge data network, EDN) moves, or a terminal device between local area data networks (local area data network, LADN) moves, an edge application server EAS that currently provides a service may be unable to continue serving the currently running application, or an edge application server EAS that currently provides a service is no longer an optimal application server that can serve the terminal device. Another EAS may be more suitable for serving an application client on the terminal device. Therefore, a new edge application server EAS needs to be selected to serve the terminal device. That is, application context information of the terminal device needs to be relocated from the current EAS to the new EAS. This process may be referred to as application context migration or application context relocation (application context relocation, ACR).

FIG. 2 is a schematic flowchart of ACR according to an embodiment of this application. The ACR includes the following phases:
1. Application context relocation detection: The application context relocation detection is to determine that context relocation may be required, and a detection entity may detect some events, for example, a location change of a terminal device or update of a user plane path of the terminal device. The detection entity may include an EEC, an EAS, an EES, or the like.
2. Application context relocation decision: A decision-making entity determines that the ACR is required. The decision-making entity may include the EEC, the EAS, and the EES.
3. Application context relocation execution: The application context relocation execution is mainly to transfer context information of an AC from a source EAS to a target EAS, and the target EAS may be a predicted EAS or an EAS that has been moved to. This step may be executed by an execution entity, and the execution entity includes the EES, the EAS, and the like. For example, the execution entity may further notify the terminal device of information about the target EAS, or notify the terminal device that network context relocation is completed, or notify the terminal device of related information of the target EAS (for example, an address of the target EAS, and N6 routing information corresponding to the target EAS).

By way of example but not limitation, when a location of the terminal device changes, the ACR detection entity predicts that an EAS of the terminal device is to change, and may send context information of the terminal device from the source EAS to the predicted target EAS in advance. A type of such ACR for transferring the context information to the target EAS in advance is correspondingly ACR for service continuity planning (service continuity planning). In the ACR for service continuity planning, the context information of the terminal device in the source EAS may be transferred to the target EAS in advance through prediction, to avoid service interruption caused by context relocation after the terminal device moves to the target EAS.

By way of example but not limitation, when a user plane path of the terminal device changes, and the terminal device is disconnected from the source EAS and is connected to the target EAS, the ACR detection entity determines that an EAS of the terminal device changes, and sends context information from the source EAS to the target EAS. A type of such ACR may be corresponding normal ACR.

4. Post-application context relocation clean up: This step involves a plurality of entities (such as the AC, the EEC, the EAS, and the EES). For example, the AC initiates a new socket connection to the target EAS.

It may be understood that ACR detection, decision, execution, and clean up may be completed by different functional entities. For example, when a type of an ACR event corresponds to the ACR for service continuity planning, ACR detection is performed by the EEC, a source EES, or the source EAS because a target EES and the target EAS have not been discovered.

For example, before the application context relocation, an EES discovery procedure and an EAS discovery procedure need to be performed, to discover the target EES and the target EAS. For example, a two-level discovery mechanism may be followed in the EES discovery procedure and the EAS discovery procedure. That is, an EES platform is first discovered, and then the EAS is discovered from the EES platform. The EES platform discovery procedure and the EAS discovery procedure may include the following steps:
S1: An EEC of a terminal device discovers an EES platform from an ECS.

For example, the EEC requests or subscribes to, from the ECS, an EES platform corresponding to a location of the terminal device, and the EEC discovers an interested EES enabling platform or an EDN from the ECS. There is detailed information about the EAS on the ECS platform. The ECS may obtain a DNAI based on the location of the terminal device, and select an appropriate EES for each AC or EEC based on the DNAI, a fully qualified domain name (fully qualified domain name, FQDN), and an EES profile (profile). For example, the ECS may select an EES platform for the AC or the EEC with reference to the location of the terminal device and another optional filter (filter).

The EEC or the ECS obtains a current or potential DNAI, and the DNAI may indicate location information of the terminal device. The EEC or the ECS may select, based on the DNAI, an EES that is close to the terminal device.

For example, the EEC may obtain information about one or more EESs from the ECS.

S2: The EEC discovers the EAS from the EES platform.

For example, the EEC sends a discovery request message to the EES, to discover a to-be-accessed application.

The EES matches information about a registered application. For example, the EES matches, based on the information about a locally registered EAS or an online EAS and a discovery filtering parameter provided by a user, an EAS that satisfies a user request. If a plurality of EASs satisfy the user request, the EES may return information about the plurality of EASs to the EEC.

The EES returns information about the EAS to the EEC. For example, after receiving the information about the EAS, the EEC may further provide the information about the EAS for the AC, so that the AC is connected to the EAS.

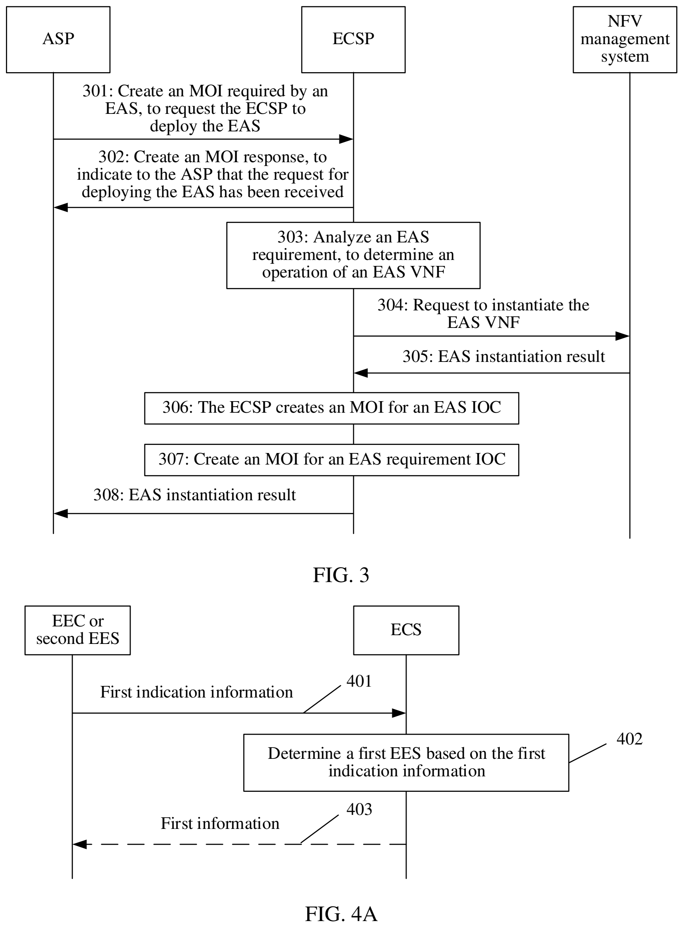

In some possible implementations, when the EEC or the AC requests to obtain an available EAS, but there is no available EAS on the current EES or EDN temporarily, the EES may trigger EAS instantiation in an edge computing service provider (edge computing service provider, ECSP) management system (management system) for the terminal device based on a requirement of the terminal device. Alternatively, in an EAS initial discovery procedure and a target EAS discovery procedure, an EES or a target EES (target EES, T-EES) may trigger an ECSP management system to perform EAS instantiation. A procedure of EAS instantiation is shown in FIG. 3.

301: An application service provider (application service provider, ASP) creates a managed object instance (managed object instance, MOI) required by an EAS, to request an ECSP to deploy the EAS.

302: The ECSP creates an MOI response to indicate to the ASP that the request for deploying the EAS has been received and that EAS deployment is in progress.

303: The ECSP analyzes an EAS requirement (for example, a KPI and a deployment location of a required EAS), to determine an operation of an EAS virtualized network function (virtualized network function, VNF).

304: The ECSP requests an NFV management network element to instantiate the EAS VNF.

305: The NFV management system indicates an EAS instantiation result to the ECSP.

306: When EAS instantiation succeeds, the ECSP creates an MOI for an EAS information managed object (information managed object, IOC).

307: When the EAS instantiation succeeds, the ECSP creates an MOI for an EAS requirement IOC.

308: The ESCP indicates the EAS instantiation result to the ASP.

As shown in FIG. 3, the ECSP management system needs time and procedure to perform EAS instantiation. For normal ACR (for example, when UE cannot obtain a service from a source EAS (source EAS, S-EAS), or when performance of a service obtained by the terminal device from the source EAS degrades, the terminal device needs to immediately migrate from the source EAS to the target EAS), EAS instantiation performed during such application context relocation procedure further causes an increase in service interruption time or an increase in performance degradation time of the service obtained by the terminal device. In ACR for service continuity planning (service continuity planning), discovery of the target EAS and application context transmission (application context transmission, ACT) may be performed in advance based on a predicted location of the terminal device. In this case, the terminal device does not need to be immediately connected to the target EAS. Therefore, when there is no available EAS on the EES or the EDN, the EES may trigger EAS instantiation for the EEC or the AC. In this case, an instantiated EAS may be used as the target EAS. In this case, the terminal device may obtain better service performance from the instantiated EAS, and service interruption time or service performance degradation time is not increased.

Generally, in a target EES discovery procedure, the ECS selects a target EES for the terminal device based on an EAS discovery filter and application information. In a target EAS discovery procedure, the target EES may select a target EAS for the terminal device based on an EAS discovery filter and the application information. Then, in the foregoing target EAS or target EES discovery procedure, when there is no available EAS on the target EES, an EAS instantiation procedure needs to be triggered. In some cases (for example, in normal ACR), service interruption time is increased, or performance degradation time of a service obtained by the terminal device is increased.

In view of this, an embodiment of this application provides a communication method, so that an appropriate EES or EAS can be selected for an application during the ACR. According to the method provided in embodiments of this application, the target EES having a required EAS can be found, to avoid an increase in service interruption time or an increase in performance degradation time of service obtained by the terminal device because EAS instantiation is performed during normal ACR. Alternatively, according to the method provided in embodiments of this application, an appropriate EAS can be found for the terminal device, so that better performance can be provided based on an ACR type or an increase in service interruption time can be avoided, and better ACR and edge computing services can be provided for the application. The method provided in embodiments of this application may be applied to the communication method shown in FIG. 1.

It may be understood that information in embodiments of this application may be carried in different messages. A message carrying information shown in embodiments of this application is merely an example, and the message carrying information is not limited in this application.

It may be understood that the methods provided in embodiments of this application may be combined with each other to form a new embodiment. Combination sequences may be determined based on specific implementation, and are not listed one by one in embodiments of this application.

FIG. 4A is an interaction diagram of a communication method according to an embodiment of this application. As shown in FIG. 4A, for an EES, an EAS, an ECS, and the like in the method, refer to the foregoing related descriptions. Details are not described herein again. It may be understood that, although a relay node is not involved in the method shown below, a person skilled in the art may learn that, when a receiving party and a sending party communicate with each other, a forwarding operation may be performed by the relay node. As shown in FIG. 4A, the method includes but is not limited to the following steps.

401: An EEC or a second EES sends first indication information, and correspondingly, the ECS receives the first indication information, where the first indication information is used to determine a first EES, and a first EAS is a target EAS of ACR corresponding to an application. That is, the first EAS is an EAS to which a context of the application is to be relocated.

For example, the application may be identified by using one or more of an AC identifier (AC identifier, ACID), an application identifier (application ID), and an EAS identifier (EAS identifier, EASID). The first indication information includes at least one of the following information: an ACR type corresponding to the application, indication information indicating that the ACR corresponding to the application is ACR for service continuity planning or normal ACR, indication information of an instantiation status of the first EAS, and first time information. The first time information indicates execution time of the ACR for service continuity planning. The execution time of the ACR for service continuity planning may also be referred to as prediction expiration time (prediction expiration time), and indicates time at which a terminal device corresponding to the application reaches an expected location or a service area of the target EAS. For example, the first time information includes first duration, which indicates that the terminal device reaches the expected location or the service area of the target EAS after the first duration.

For example, the ACR type (ACR type) corresponding to the application may include the ACR for service continuity planning or the normal ACR. The ACR for service continuity planning means that application context relocation is initiated in advance based on a predicted location of the terminal device corresponding to the application, so that after the terminal device reaches the predicted location, an AC may be directly connected to the target EAS. The normal ACR means that, based on a current location of the terminal device corresponding to the application, the terminal device cannot perform application context relocation at the current location.

For example, the indication information of the instantiation status of the first EAS may indicate that the instantiation status of the first EAS is an instantiated state, or the indication information of the instantiation status of the first EAS indicates that the instantiation status of the first EAS is an instantiable but not instantiated yet state, and may indicate a requirement for the instantiation status of the first EAS.

In an example, the first indication information includes an ACR type field, and the ACR type field indicates the ACR type corresponding to the application. For example, if the ACR type field is x, it indicates that the ACR type corresponding to the application is the ACR for service continuity planning; and if the ACR type field is y, it indicates that the ACR type corresponding to the application is the normal ACR. It may be understood that x and y represent different values of the ACR type field, and x and y may be different values. For example, x may be 0, and y may be 1, or x and y may be other values. This is not limited in this application.

For example, the second EES may be an EES corresponding to a source EAS that currently serves the application. The second EES may obtain the ACR type corresponding to the application from the source EAS, or the second EES may determine the ACR type corresponding to the application based on a service requirement of the application. The EEC may be an EEC corresponding to the application, and the EEC may determine the ACR type corresponding to the application based on the service requirement of the application.

It may be understood that the EEC may be an entity on the terminal device. In this embodiment of this application, the EEC, the AC, and the terminal device may be replaced with each other. That is, steps or functions performed by the EEC in this embodiment of this application may be performed by the terminal device or the AC.

In an example, the first indication information may be carried in a third message, and the third message may further include application information. The application information may include at least one of the ACID, the application identifier, and the EASID, and the application information indicates an application for which ACR needs to be performed.

For example, the third message may include a retrieve T-EES request (retrieve T-EES request) or a service provisioning request (service provisioning request) message. The retrieve T-EES request message or the service provisioning request message may further include at least one of the following: an EAS discovery filter (EAS discovery filter), a UE identifier (UE identifier, UEID), the AC identifier (AC identifier, ACID), and the EAS identifier. The EAS discovery filter indicates a condition that is satisfied by the target EAS (that is, the first EAS) required by the application, and the EAS identifier indicates the required target EAS.

It may be understood that the retrieve T-EES request message or the service provisioning request message is merely an example, and the third message may further include another message. That is, the first indication information may alternatively be carried in the another message. This is not limited in this application.

402: The ECS determines the first EES based on the first indication information.

For example, the ECS may determine the first EES based on the first indication information and at least one of the following: an instantiation status of an EAS associated with at least one EES corresponding to the ECS, and second time information. The second time information indicates instantiation time of the first EAS, or the second time information indicates time required for the EAS to change from an uninstantiated state to the instantiated state, or indicates time required for EAS instantiation.

For example, the second time information is applicable to one EAS (for example, the first EAS). That is, the second time information indicates the instantiation time of the first EAS. Alternatively, the second time information is applicable to a plurality of EASs (for example, EASs of a type), and the second time information indicates time required for EAS instantiation.

For example, the second time information may be historical-based time information or predicted time information. The ECS may obtain the second time information from a network management system, or the second time information may be locally configured.

For example, the ECS may be associated with the at least one EES, the ECS maintains information about the at least one EES, and the information about the at least one EES includes instantiation status information of an EAS corresponding to each EES. The instantiation status information of the EAS may include instantiated or instantiable but not instantiated yet, or the instantiation status information of the EAS may include at least one of information about an EAS that is instantiable but not instantiated yet, an EAS identifier (EAS identifier, EASID) of an EAS that is instantiable but not instantiated yet, information about an instantiated EAS, or an EASID of an instantiated EAS. For example, the ECS may obtain the information about the at least one EES by using a registration request message from the at least one EES. Each EES corresponds to at least one EAS, and each EAS corresponds to instantiation status information; or an EAS instantiation type corresponding to an EES includes: instantiable but not instantiated yet and instantiated. The instantiable but not instantiated yet state corresponds to at least one EAS, and the instantiated state corresponds to at least one EAS.

For example, the following several implementations for the ECS to determine the first EES based on the first indication information are further provided in this embodiment of this application:

Implementation 1: The ECS may determine the first EES from the at least one EES based on the first indication information and the instantiation status of the EAS associated with the at least one EES corresponding to the ECS. For example, the ECS determines, based on the first indication information, to select an EES corresponding to an instantiated EAS or select an EES corresponding to an EAS that is instantiable but not instantiated yet.

In an example, the first indication information includes the ACR type corresponding to the application, or the first indication information includes the indication information indicating that the corresponding ACR is the ACR for service continuity or the normal ACR.

When the ACR type is a normal ACR type, or the first indication information includes indication information indicating that the ACR corresponding to the application is the normal ACR, if EAS instantiation is performed during the application context relocation, service interruption time or performance degradation time of a service obtained by the terminal device is further increased. Therefore, the ECS determines to select an EES corresponding to an instantiated EAS, so that an increase in the service interruption time or an increase in the performance degradation time of the service obtained by the terminal device can be avoided. For example, the ECS selects, from the at least one EES based on the instantiation status of the EAS corresponding to the at least one EES, an EES associated with an instantiated EAS as the first EES. That is, the first EES corresponds to the instantiated EAS.

When the ACR type is an ACR type for service continuity planning, or the first indication information includes indication information indicating that the ACR corresponding to the application is the ACR for service continuity planning, target EAS discovery and ACT may be performed in advance based on the predicted location of the terminal device, and the terminal device does not need to be immediately connected to the target EAS. In this case, the ECS may select an EES corresponding to an EAS that is instantiable but not instantiated yet, so that the EES triggers EAS instantiation for the terminal device, the terminal device can obtain better service performance from an instantiated EAS, and service interruption time or service performance degradation time is not increased. For example, the ECS selects, as the first EES from the at least one EES based on the instantiation status of the EAS corresponding to the at least one EES, an EES associated with an EAS that is instantiable but not instantiated yet. That is, the first EES corresponds to the EAS that is instantiable but not instantiated yet.

In another example, the first indication information includes the indication information of the instantiation status of the first EAS. The ECS determines, as the first EES from the at least one EES, an EES that matches the instantiation status of the first EAS. For example, when the instantiation status of the first EAS is the instantiated state, the ECS selects, as the first EES from the at least one EES based on the instantiation status of the EAS corresponding to the at least one EES, an EES associated with an instantiated EAS. That is, the first EES corresponds to the instantiated EAS. For another example, when the instantiation status of the first EAS is the instantiable but not instantiated yet state, the ECS selects, as the first EES from the at least one EES based on the instantiation status of the EAS corresponding to the at least one EES, an EES associated with an EAS that is instantiable but not instantiated yet. That is, the first EES corresponds to the EAS that is instantiable but not instantiated yet.

In still another example, the first indication information includes the first time information. In this case, the ACR corresponding to the application may be the ACR for service continuity. The ECS may determine, based on the execution time of the ACR for service continuity planning, to select an EES corresponding to an instantiated EAS, or select an EES corresponding to an EAS that is instantiable but not instantiated yet. For example, the first time information includes the first duration. When the first duration is greater than or equal to a first threshold, it indicates that the terminal device corresponding to the application moves to an expected location after long time. Execution of an EAS instantiation procedure in the ACR process does not increase service interruption time. Therefore, the ECS determines to select, as the first EES, an EES corresponding to an EAS that is instantiable but not instantiated yet. That is, the first EES corresponds to an EAS that is instantiable but not instantiated yet. When the first duration is less than or equal to the first threshold, it indicates that the terminal device corresponding to the application moves to an expected location in short time. Execution of an EAS instantiation procedure in the ACR process causes an increase in service interruption time. Therefore, the ECS determines to select an EES corresponding to an instantiated EAS as the first EES. That is, the first EES corresponds to an instantiated EAS.

It may be understood that the first threshold may be configured by the ECS based on a service requirement of the application, or the first threshold may be obtained by the ECS from an operations, administration, and maintenance (operations, administration and maintenance, OAM) system, or the first threshold may be obtained by an EES from the OAM system and then sent to the ECS. The first threshold is applicable to one EAS, or the first threshold is applicable to a plurality of EASs. The first threshold may be determined based on a historical value or a predicted value.

Implementation 2: The ECS may determine the first EES from the at least one EES based on the first indication information, the instantiation status of the EAS associated with the at least one EES corresponding to the ECS, and the second time information.

For example, the ECS may obtain the information about the at least one EES by using a registration request message from the at least one EES. Each EES corresponds to at least one EAS, and each EAS corresponds to instantiation status information and time information required for instantiation. That is, a registration request message sent by the first EES to the ECS carries the second time information, which indicates time required for instantiating the first EAS.

In an example, the first indication information includes the first time information, and the ECS may determine the first EES from the at least one EES based on the first time information, the second time information, and the instantiation status of the EAS associated with the at least one EES. For example, the ECS may determine, based on a result of comparison between the execution time of the ACR and the time required for instantiating the first EAS, to select an EES corresponding to an instantiated EAS as the first EES, or select, as the first EES, an EES corresponding to an EAS that is instantiable but not instantiated yet. For example, when the execution time of the ACR for service continuity planning is less than the instantiation time of the first EAS, the ECS determines to select an EES corresponding to an instantiated EAS as the first EES. That is, the first EES corresponds to the instantiated EAS. For another example, when the execution time of the ACR for service continuity planning is greater than or equal to the instantiation time of the first EAS, the ECS determines to select, as the first EES, an EES corresponding to an EAS that is instantiable but not instantiated yet. That is, the first EES is associated with the EAS that is instantiable but not instantiated yet.

It may be understood that, when the execution time of the ACR for service continuity planning is equal to the instantiation time of the first EAS, the ECS may select the EES corresponding to the instantiated EAS, or may select the EES corresponding to the EAS that is instantiable but not instantiated yet.

In some possible implementations, the method shown in FIG. 4A further includes step 403.

403: The ECS sends first information, and correspondingly, the second EES or the EEC receives the first information. The first information includes at least one of the following: the information about the at least one EES, instantiation status information of the EAS associated with the at least one EES, and information about the first EES. The at least one EES includes the first EES.

For example, the information about the at least one EES may include identification information, EES endpoint, and the like of each of the at least one EES. The instantiation status information of the EAS associated with the at least one EES may include an instantiation status of an EAS corresponding to the EES.

It may be understood that when the first indication information is from the second EES, the ECS sends the first information to the second EES. When the first indication information is from the EEC, the ECS sends the first information to the EEC.

For example, the first information may be carried in a retrieve T-EES response (retrieve T-EES response) or a service provisioning response (service provisioning response) message.

In a possible implementation, the first information includes the information about the first EES. After determining the first EES from the at least one EES based on the first indication information, the ECS may send the information about the first EES to the second EES or the EEC by using the retrieve T-EES response message or the service provisioning response message.

In this embodiment of this application, the ECS may discover, based on at least one of the ACR type, the first time information, and the instantiation status information of the EAS, a target EES having a required EAS. For example, the ECS determines, based on at least one of the ACR type, the first time information, and the instantiation status information of the EAS, whether to select the EES corresponding to the EAS that is instantiable but not instantiated yet. For example, when the ACR corresponding to the application is the normal ACR, or the ACR corresponding to the application is the ACR for service continuity planning and the execution time of the ACR for service continuity planning is greater than the instantiation time of the EAS, an EES corresponding to an instantiated EAS is selected, to reduce service interruption time. When the ACR corresponding to the application is the ACR for service continuity planning, or when the execution time of the ACR for service continuity planning is greater than the instantiation time of the EAS, an EES corresponding to an EAS that is instantiable but not instantiated yet is selected. In this case, when the instantiated EAS cannot provide a good KPI, the EES may trigger the OAM system to trigger EAS instantiation, so that an EAS with a better KPI can be provided for the UE, and better ACR and edge computing services can be provided for the UE.

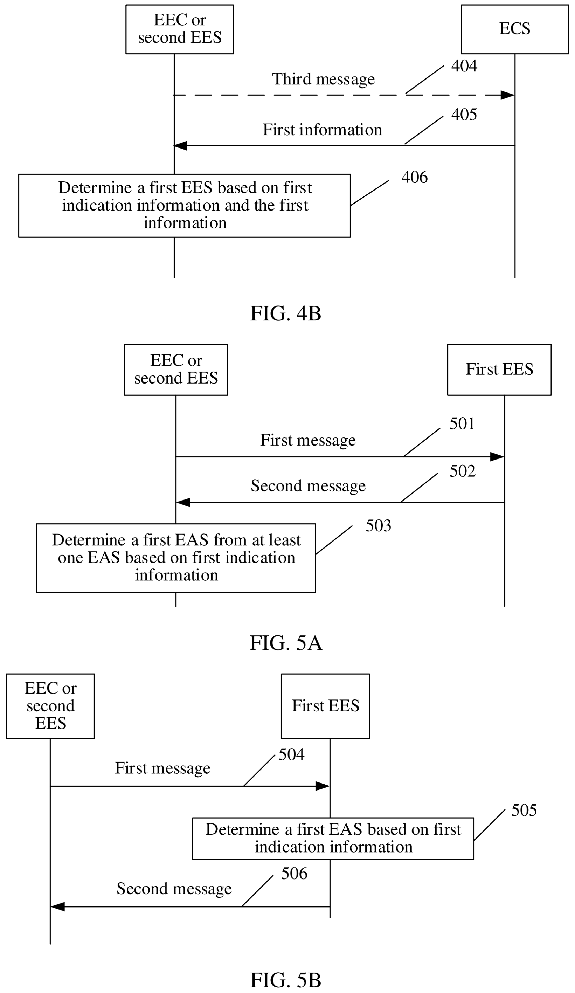

FIG. 4B is an interaction diagram of another communication method according to an embodiment of this application. As shown in FIG. 4B, for an EES, an EAS, an ECS, and the like in the method, refer to the foregoing related descriptions. Details are not described herein again. It may be understood that, although a relay node is not involved in the method shown below, a person skilled in the art may learn that, when a receiving party and a sending party communicate with each other, a forwarding operation may be performed by the relay node. As shown in FIG. 4B, the method includes but is not limited to the following steps.

Optionally, the method shown in FIG. 4B may include step 404.

404: A second EES or an EEC sends a third message, and correspondingly, the ECS receives the third message, where the third message is used to obtain information about at least one EES.

Optionally, the third message includes at least one of the following information: first indication information, application information, identification information of the second EES, a UE identifier, and an EEC identifier.

It may be understood that for specific descriptions of the first indication information and the application information, refer to related descriptions of step 401. Details are not described herein again.

405: The ECS sends first information, and correspondingly, the second EES or the EEC receives the first information, where the first information includes the information about the at least one EES and instantiation status information of an EAS associated with the at least one EES.

For example, the at least one EES is an EES that matches an application. The second EES or the EEC may send the application information to the ECS, and the ECS determines, based on the application information, the at least one EES that matches the application.

For example, the first information may be carried in a retrieve T-EES response or a service provisioning response message.

406: The second EES or the EEC determines the first EES based on the first indication and the first information.

In a possible implementation, the first information may further include second time information, and the second time information indicates time information required for instantiating the EAS corresponding to the at least one EES. The second EES or the EEC determines the first EES from the at least one EES based on at least one of the application information, the first indication information, the second time information, and the instantiation status information of the EAS corresponding to the at least one EES. For example, the second EES or the EEC may determine, from the at least one EES based on the application information, the first EES that matches the application, or the second EES or the EEC may determine the first EES from the at least one EES based on the first indication information and the second time information, or the second EES or the EEC may determine the first EES from the at least one EES based on the first indication information and the instantiation status information of the EAS corresponding to the at least one EES.

It may be understood that, for a specific implementation of determining the first EES by the second EES or the EEC, refer to the specific implementation of determining the first EES by the ECS in step 402. Details are not described herein again.

In this embodiment of this application, the ECS may send the information about the at least one EES to the second EES or the ECS, and then the second EES or the EEC determines the first EES from the at least one EES. The second EES or the EEC may discover, based on at least one of an ACR type, the first time information, and the instantiation status information of the EAS, a target EES having a required EAS. For example, the second EES or the EEC determines, based on at least one of the ACR type, the first time information, and the instantiation status information of the EAS, whether to select an EES corresponding to an EAS that is instantiable but not instantiated yet. For example, when ACR corresponding to the application is normal ACR, or the ACR corresponding to the application is ACR for service continuity planning and execution time of the ACR for service continuity planning is greater than instantiation time of the EAS, an EES corresponding to an instantiated EAS is selected, to reduce service interruption time. When the ACR corresponding to the application is the ACR for service continuity planning, or when the execution time of the ACR for service continuity planning is greater than the instantiation time of the EAS, an EES corresponding to an EAS that is instantiable but not instantiated yet is selected. In this case, when the instantiated EAS cannot provide a good KPI, the EES may trigger an OAM system to trigger EAS instantiation, so that an EAS with a better KPI can be provided for UE, and better ACR and edge computing services can be provided for the UE.

FIG. 5A is an interaction diagram of still another communication method according to an embodiment of this application. As shown in FIG. 5A, for an EES, an EAS, an ECS, and the like in the method, refer to the foregoing related descriptions. Details are not described herein again. It may be understood that, although a relay node is not involved in the method shown below, a person skilled in the art may learn that, when a receiving party and a sending party communicate with each other, a forwarding operation may be performed by the relay node. As shown in FIG. 5A, the method includes but is not limited to the following steps.

501: A second EES or an EEC sends a first message to a first EES, and correspondingly, the first EES receives the first message, where the first message is used to obtain information about a first EAS or report the information about the first EAS, the first message includes first indication information, the first EAS is a target EAS of an ACR corresponding to an application, and the first indication information is used to determine the first EAS.

For example, the first indication information includes at least one of the following information: an ACR type corresponding to the application, indication information indicating that the ACR corresponding to the application is ACR for service continuity planning or normal ACR, indication information of an instantiation status of the first EAS, and first time information. The first time information indicates execution time of the ACR for service continuity planning.

For example, the information about the first EAS may include an identifier of the first EAS, and the first message is used to report the identifier of the first EAS to indicate the first EAS.

For example, the first message may include an EAS discovery request (EAS discovery request) message or an EAS information provisioning (EAS information provisioning) message, and is used to request the information about the first EAS from the second EES. The first message may further include an EAS discovery filter, to indicate a condition that the first EAS needs to satisfy.

It may be understood that for specific descriptions of the second EES, the EEC, the first indication information, and the like, refer to related descriptions of step 401 in FIG. 4A. Details are not described herein again.

In this embodiment of this application, the first indication information is at least one piece of information in the ACR type corresponding to the application, the indication information indicating that the ACR corresponding to the application is the ACR for service continuity planning or the normal ACR, the indication information of the instantiation status of the first EAS, and the first time information, and is a name used to determine the first EES or the information about the first EAS. A name of the information is not limited in this application. The first indication information may be carried in different messages. For example, the first indication information in step 401 may be carried in the retrieve T-EES request message, and the first indication information in step 501 may be carried in the first message. A message that carries the first indication information is not limited in this application.

502: The first EES sends a second message to the second EES or the EEC, and correspondingly, the second EES or the EEC receives the second message, where the second message includes information about at least one EAS, and the at least one EAS includes the first EAS.

Optionally, the at least one EAS is an EAS that matches the application and that satisfies the EAS discovery filter.

For example, the at least one EAS includes the first EAS. That is, the information about the at least one EAS includes the information about the first EAS. The information about the at least one EAS includes at least one of instantiation status information, identification information, and endpoint of each EAS. That is, the information about the first EAS includes at least one of instantiation status information of the first EAS, identification information of the first EAS, and endpoint of the first EAS.

For example, when the first message is from the second EES, the first EES sends the second message to the second EES. When the first message is from the EEC, the first EES sends the second message to the EEC.

For example, the second message may include an EAS discovery response (EAS discovery response) message, the second message includes the information about the at least one EAS, and the at least one EAS is an EAS that satisfies the EAS discovery filter.

503: The second EES or the EEC determines the first EAS from the at least one EAS based on the first indication information.

For example, after determining the first EAS, the second EES or the EEC may send the information about the first EAS to the first EES. When the first EAS is an EAS that is instantiable but not instantiated yet, the first EES triggers an EAS instantiation procedure for the first EAS to an OAM system.

In an example, the information about the at least one EAS includes the instantiation status information of each EAS. The second EES or the EEC determines the first EAS from the at least one EAS based on at least one of the ACR type corresponding to the application, the instantiation status information of the first EAS, and the information about the at least one EAS. For example, the second EES or the EEC may obtain the instantiation status information of the first EAS from a source EAS of the ACR corresponding to the application, or the second EES or the EEC may determine the instantiation status information of the first EAS based on the ACR type corresponding to the application. For example, when the ACR type is the ACR for service continuity planning, the second EES or the EEC determines that the target EAS of the ACR corresponding to the application is an EAS that is instantiable but not instantiated yet. That is, an instantiation status of the first EAS is an instantiable but not instantiated yet state. When the ACR type is the normal ACR, the second EES or the EEC determines that the target EAS of the ACR corresponding to the application is an instantiated EAS. That is, an instantiation status of the first EAS is an instantiated state.

The second EES or the EEC may select, as the first EAS from the at least one EAS, an EAS that matches the instantiation status of the first EAS. For example, when the instantiation status of the first EAS is the instantiated state, the second EES selects an instantiated EAS from the at least one EAS. For another example, when the instantiation status of the first EAS is the instantiable but not instantiated yet state, the second EES or the EEC selects an EAS that is instantiable but not instantiated yet from the at least one EAS.

In another example, the information about the at least one EAS includes time required for instantiating each EAS that is instantiable but not instantiated yet, the information about the first EAS includes second time information, and the second time information indicates instantiation time of the first EAS. The second EES or the EEC determines the first EAS from the at least one EAS based on the first time information and the second time information. For example, the second EES or the EEC may obtain the first time information from the source EAS of the ACR corresponding to the application. The second EES or the EEC may determine the first EAS based on a comparison result of the execution time of the ACR for service continuity planning and the instantiation time of the first EAS.

For example, the second EES or the EEC may separately compare the execution time of the ACR for service continuity planning with time required for instantiating an EAS that is instantiable but not instantiated yet in the at least one EAS. When the at least one EAS includes an EAS whose instantiation time is less than the execution time of the ACR for service continuity planning, the second EES selects, as the first EAS, an EAS that is instantiable but not instantiated yet from the at least one EAS, and the time required for instantiating the first EAS is less than or equal to the execution time of the ACR for service continuity planning. When time required for instantiating any EAS in the at least one EAS is greater than the execution time of the ACR for service continuity planning, the second EES or the EEC selects an instantiated EAS from the at least one EAS as the first EAS.

In this embodiment of this application, after receiving the first message, the first EES sends the information about the at least one EAS to the second EES or the EEC by using the second message, so that the second EES or the EEC can determine the target EAS (namely, the first EAS) of the ACR corresponding to the application from the at least one EAS based on the information about the at least one EAS. The second EES or the EEC may discover the required target EAS based on at least one of the ACR type, the first time information, and the instantiation status information of the EAS. For example, the second EES or the EEC determines, based on at least one of the ACR type, the first time information, and the instantiation status information of the EAS, whether to select an EAS that is instantiable but not instantiated yet. For example, when the ACR corresponding to the application is the normal ACR, or the ACR corresponding to the application is the ACR for service continuity planning and the execution time of the ACR for service continuity planning is greater than the instantiation time of the EAS, an instantiated EAS is selected, to reduce service interruption time. When the ACR corresponding to the application is the ACR for service continuity planning, or when the execution time of the ACR for service continuity planning is greater than the instantiation time of the EAS, an EAS that is instantiable but not instantiated yet is selected. In this case, when the instantiated EAS cannot provide a good KPI, the EES may trigger the OAM system to trigger EAS instantiation, so that an EAS with a better KPI can be provided for UE, and better ACR and edge computing services can be provided for the UE.

FIG. 5B is an interaction diagram of still another communication method according to an embodiment of this application. As shown in FIG. 5B, for an EES, an EAS, an ECS, and the like in the method, refer to the foregoing related descriptions. Details are not described herein again. It may be understood that, although a relay node is not involved in the method shown below, a person skilled in the art may learn that, when a receiving party and a sending party communicate with each other, a forwarding operation may be performed by the relay node. As shown in FIG. 5B, the method includes but is not limited to the following steps.

504: A second EES or an EEC sends a first message to a first EES, and correspondingly, the first EES receives the first message, where the first message is used to obtain information about a first EAS or report the information about the first EAS, the first message includes first indication information, the first EAS is a target EAS of an ACR corresponding to an application, and the first indication information is used to determine the first EAS.

505: The first EES determines the first EES based on the first indication information.

For example, the first EES may determine, based on the first indication information, an instantiation status of at least one EAS, and time information required for instantiating the at least one EAS, the first EAS from the at least one EAS associated with the first EES.

In an example, when ACR type corresponding to the application includes a normal ACR type, or the first indication information includes indication information indicating that the ACR corresponding to the application is normal ACR, or an instantiation status of the first EAS includes an instantiated state, the first EAS includes an instantiated EAS.

In another example, when the ACR type corresponding to the application includes an ACR type for service continuity planning, or the first indication information includes indication information indicating that the ACR corresponding to the application is the ACR for service continuity planning, or the instantiation status of the first EAS includes an instantiable but not instantiated yet state, the first EAS includes an EAS that is instantiable but not instantiated yet.

In still another example, when execution time of the ACR for service continuity planning is less than instantiation time of the first EAS, the instantiation status of the first EAS includes the instantiated state.

In still another example, when the execution time of the ACR for service continuity planning is greater than or equal to the instantiation time of the first EAS, the instantiation status of the first EAS includes the instantiable but not instantiated yet state.

It may be understood that, when the execution time of the ACR for service continuity planning is equal to the instantiation time of the first EAS, the first EES may select, as the first EAS, an EAS that is instantiable but not instantiated yet, or may select an instantiated EAS as the first EAS.

It may be understood that, for a specific implementation of determining the first EAS by the first EES based on the first indication information, refer to the specific implementation of determining the first EAS by the first EES or the EEC in step 503. Details are not described herein again.

In a possible implementation, when the first EAS is an EAS that is instantiable but not instantiated yet, the first EES may further trigger an instantiation procedure for the first EAS to a network management system.

506: The first EES sends a second message to the second EES or the EEC, and correspondingly, the second EES or the EEC receives the second message, where the second message includes the information about the first EAS.

In this embodiment of this application, after receiving the first message, the first EES determines the first EAS based on the first indication information, and sends the information about the first EAS to the second EES or the EEC by using the second message. The first EES may discover the required target EAS based on at least one of the ACR type, first time information, and instantiation status information of the EAS. For example, the first EES determines, based on at least one of the ACR type, the first time information, and the instantiation status information of the EAS, whether to select an EAS that is instantiable but not instantiated yet. For example, when the ACR corresponding to the application is the normal ACR, or the ACR corresponding to the application is the ACR for service continuity planning and the execution time of the ACR for service continuity planning is greater than the instantiation time of the EAS, an instantiated EAS is selected, to reduce service interruption time. When the ACR corresponding to the application is the ACR for service continuity planning, or when the execution time of the ACR for service continuity planning is greater than the instantiation time of the EAS, an EAS that is instantiable but not instantiated yet is selected. In this case, when the instantiated EAS cannot provide a good KPI, the EES may trigger the OAM system to trigger EAS instantiation, so that an EAS with a better KPI can be provided for UE, and better ACR and edge computing services can be provided for the UE.

It may be understood that the methods provided in embodiments of this application may be combined with each other, and combination sequences may be determined based on specific implementation, and are not listed one by one in embodiments of this application. For example, FIG. 4A may be combined with the method shown in FIG. 5A or FIG. 5B, and FIG. 4B may be combined with the method shown in FIG. 5A or FIG. 5B. That is, the second EES, the EEC, or the ECS determines the first EES based on the first indication information. The second EES or the EEC sends a first message to the first EES to request the information about the first EAS or report the information about the first EAS, and the first EES returns the information about the at least one EAS or the information about the first EAS by using the second message.

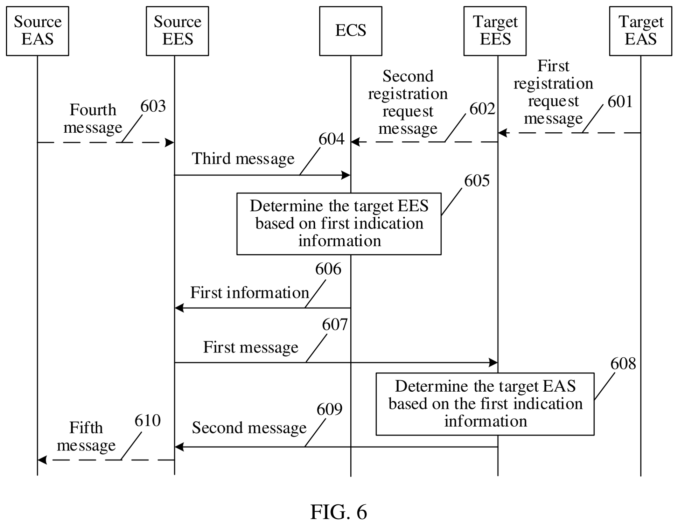

FIG. 6 is an interaction diagram of still another communication method according to an embodiment of this application. As shown in FIG. 6, the method may be applied to the communication system shown in FIG. 1, or the method is applied to a source EAS or an AC, a source EES or an EEC, an ECS, a target EES, and a target EAS. For example, the source EES may be the second EES described above, the target EES may be the first EES described above, and the target EAS may be the first EAS described above.

It may be understood that, although a relay node is not involved in the method shown below, a person skilled in the art may learn that, when a receiving party and a sending party communicate with each other, a forwarding operation may be performed by the relay node. As shown in FIG. 6, the method includes but is not limited to the following steps.

In some implementations, the method shown in FIG. 6 may include step 601 and step 602.

601: The target EAS sends a first registration request message, and correspondingly, the target EES receives the first registration request message, where the first registration request message includes information about the EAS.

For example, after receiving the first registration request message, the target EES may further send a corresponding response message to the target EES.

602: The target EES sends a second registration request message to the ECS, and correspondingly, the ECS receives the second registration request message. The second registration request message carries instantiation information of the EAS, that is, instantiation status information corresponding to EASID information, and includes at least one of the following information: instantiable but not instantiated yet and instantiated. Alternatively, the instantiation information of the EAS may be instantiable but not instantiated yet EAS information (instantiable but not instantiated yet EAS information) and a corresponding EASID, or an instantiated EAS and a corresponding EASID.

For example, after receiving the second registration request message, the ECS may further send a corresponding response message to the target EES.

Optionally, the ECS may also obtain the information about the EAS (including the instantiation information of the EAS) in a preconfiguration manner.

For example, the target EES maintains a list of EASs that are instantiable but not instantiated yet or instantiated. The EAS list may be stored in a target EES, for example, the EAS list may be stored in a target EES profile (profile).

In an example, the EAS list may be shown in Table 1. The EES profile includes information about each EAS, and each EAS may be identified by using an EAS ID. Information about each EAS includes an instantiation status of the corresponding EAS. The instantiation status of the EAS may be instantiated or instantiable but not instantiated yet.

**Table 1**

| EES profile (EES profile) | |
|---|---|
| EAS ID | EAS identifier |
| >Instantiation status (instantiation status) | Instantiated or instantiable but not instantiated yet (Instantiated or instantiable but not instantiated yet) |

In another example, the EAS list may be shown in Table 2. The EES profile may include information about an instantiated EAS and information about an EAS that is instantiable but not instantiated yet. The information about the instantiated EAS includes an identifier of the instantiated EAS. The information about the EAS that is instantiable but not instantiated yet includes an identifier of the EAS that is instantiable but not instantiated yet.

**Table 2**

| EES profile (EES profile) | |
|---|---|
| Instantiated EAS information (Instantiated EAS information) | Instantiated EAS |
| >EASID | EAS identifier |
| Instantiable but not instantiated yet EAS information (instantiable but not instantiated yet EAS information) | EAS that is instantiable but not instantiated yet |
| >EASID | EAS identifier |

It may be understood that the target EES may obtain the EAS list through a network management system, or obtain the EAS list in a preconfiguration manner. A manner in which the target EES obtains the EAS list is not limited in this application.

Optionally, the method shown in FIG. 6 may include step 603.

603: The source EAS sends a fourth message, and correspondingly, the source EES receives the fourth message. The fourth message includes an EAS discovery filter, a UEID, an ACR type, or indication information indicating that ACR corresponding to an application is ACR for service continuity planning or normal ACR.

For example, the fourth message may include an EAS discovery request message.

The source EAS is an EAS that currently serves the application, that is, the source EAS of the ACR corresponding to the application, or the source EAS may be referred to as an EAS to which a context of the application is to be relocated, or an EAS currently connected to a terminal device.

It may be understood that the source EES maintains a corresponding EAS list, and the EAS list includes information about the source EAS.

604: The source EES sends a third message, and correspondingly, the ECS receives the third message, where the third message includes first indication information.

It may be understood that for specific descriptions of step 604, refer to specific descriptions of step 401 in FIG. 4A. Details are not described herein again.

605: The ECS determines the target EES based on the first indication information. That is, the ECS may select, as the target EES based on the first indication information, an EES corresponding to an EAS that is instantiable but not instantiated yet, or select an EES corresponding to an instantiated EAS as the target EES.

For example, when the ACR type corresponding to the application is the normal ACR, the ECS determines to select the EES corresponding to the instantiated EAS. When an ACR type corresponding to the application is ACR for service continuity planning, the ECS determines to select the EES corresponding to the EAS that is instantiable but not instantiated yet.

It may be understood that, for a specific implementation of determining the target EES by the ECS, refer to related descriptions of step 402. Details are not described herein again.

606: The ECS sends first information, and correspondingly, the source EES receives the first information. The first information includes information about the target EES.

For example, the first information may be carried in a retrieve T-EES response message, and the retrieve T-EES response message includes the information about the target EES. The information about the target EES includes an EASID of an EAS corresponding to the target EES.

Optionally, the information about the target EES may further include instantiation status information of the EAS corresponding to the target EES. For example, the EAS corresponding to the target EES is an instantiated EAS, or the EAS corresponding to the target EES is an EAS that is instantiable but not instantiated yet.

For example, the information about the target EES further includes identification information (EES ID) and EES endpoint (endpoint) of the target EES.

It may be understood that for specific descriptions of step 606, refer to specific descriptions of step 403 in FIG. 4A. Details are not described herein again.

607: The source EES sends a first message, and correspondingly, the target EES receives the first message, where the first message is used to obtain the information about the target EAS, and the first message includes the first indication information.

For example, the first message may include an EAS discovery request message, and the EAS discovery request message may further include an EAS discovery filter.

It may be understood that for specific descriptions of step 607, refer to specific descriptions of step 504 in FIG. 5B. Details are not described herein again.

608: The target EES determines the target EAS based on the first indication information. In other words, the target EES determines, based on the first indication information, whether to select, as the target EAS, an EAS that is instantiable but not instantiated yet.

For example, when the ACR type corresponding to the application is normal ACR, the target EES determines to select an instantiated EAS as the target EAS. When the ACR type corresponding to the application is the ACR for service continuity planning, the target EES may select an EAS that is instantiable but not instantiated yet, and trigger an EAS instantiation procedure to an OAM system.

It may be understood that, for a specific implementation of determining the target EAS by the target EES, refer to the specific implementation in step 505 in the method shown in FIG. 5B. Details are not described herein again.

609: The target EES sends a second message, and correspondingly, the source EES receives the second message. The second message includes the information about the target EAS. Optionally, the information about the target EAS may include instantiation status information of the target EAS.

For example, the information about the target EAS may further include an EAS profile. The EAS profile includes an EAS ID and EAS endpoint (endpoint).

It may be understood that, when the target EAS is an EAS that is instantiable but not instantiated yet, the target EES may send instantiated EAS information to the source EES after the target EAS is instantiated.

It may be understood that for specific descriptions of step 604, refer to specific descriptions of step 506 in FIG. 5B. Details are not described herein again.

Optionally, the method shown in FIG. 6 may further include step 610.

610: The source EES sends a fifth message, and correspondingly, the source EAS receives the fifth message. The fifth message includes the information about the target EAS. Optionally, the information about the target EAS may include the instantiation status information of the target EAS.

For example, the fifth message may include an EAS discovery response message.

It may be understood that for parameters (such as the first indication information, the first message, the second message, and the first information) in the method shown in FIG. 6, refer to related descriptions in FIG. 4A, FIG. 4B, FIG. 5A, or FIG. 5B. Details are not described herein again.

In some possible implementations, in the method shown in FIG. 6, the source EAS may be replaced with the AC, and the source EES may be replaced with the EEC. That is, the AC may perform the steps, functions, or the like performed by the source EAS in the method embodiment shown in FIG. 6, and the EEC may perform the steps, functions, or the like performed by the source EES in the method embodiment shown in FIG. 6. For example, the AC may perform the sending step in step 603 and the receiving step in step 610. The EEC may perform the receiving steps in step 603, step 606, and step 609, and the sending steps in step 605, step 607, and step 610.

In this embodiment of this application, the source EES may send the first indication information to the ECS by using the third message, so that the ECS can select an appropriate target EES for a terminal device based on the ACR type or the indication information indicating that the ACR corresponding to the application is the ACR for service continuity or the normal ACR. In addition, the source EES sends the first indication information to the target EES by using the first message, so that the target EES can select an appropriate target EAS for the terminal device based on the ACR type or the indication information indicating that the ACR corresponding to the application is the ACR for service continuity or the normal ACR. That is, the ECS and the target EES can determine, based on the ACR type, whether to select an EAS that is instantiable but not instantiated yet. For ACR of the normal ACR type, an instantiated EAS may be selected, so that service interruption time can be reduced. For ACR of the ACR type for service continuity planning, an EAS that is instantiable but not instantiated yet may be selected. When the instantiated EAS cannot provide a good KPI, a new EAS may be instantiated for the AC, and an EAS with a better KPI can be provided for the UE.

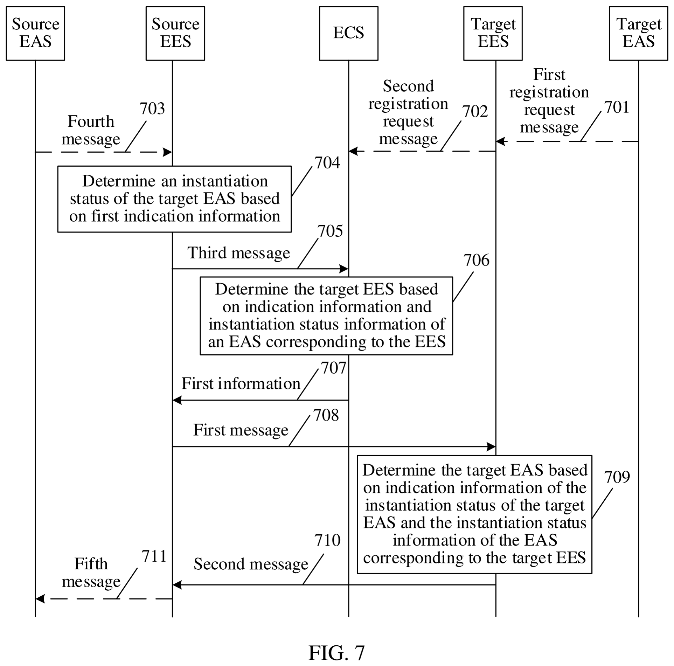

FIG. 7 is an interaction diagram of still another communication method according to an embodiment of this application. As shown in FIG. 7, the method may be applied to the communication system shown in FIG. 1, or the method is applied to a source EAS or an AC, a source EES or an EEC, an ECS, a target EES, and a target EAS. For example, the source EES may be the second EES described above, the target EES may be the first EES described above, and the target EAS may be the first EAS described above.

It may be understood that, although a relay node is not involved in the method shown below, a person skilled in the art may learn that, when a receiving party and a sending party communicate with each other, a forwarding operation may be performed by the relay node. As shown in FIG. 7, the method includes but is not limited to the following steps.

In some implementations, the method shown in FIG. 7 may include step 701 and step 702.

701: The target EAS sends a first registration request message, and correspondingly, the target EES receives the first registration request message, where the first registration request message includes information about the EAS.

For example, after receiving the first registration request message, the target EES may further send a corresponding response message to the target EES.

702: The target EES sends a second registration request message to the ECS, and correspondingly, the ECS receives the second registration request message. The second registration request message carries instantiation information of an EAS corresponding to the target EAS.

For example, after receiving the second registration request message, the ECS may further send a corresponding response message to the target EES.

Optionally, the ECS may also obtain the information about the EAS (including the instantiation information of the EAS) in a preconfiguration manner.

For example, the target EES maintains a list of EASs that are instantiable but not instantiated yet or instantiated.

Optionally, the method shown in FIG. 7 may include step 703.

703: The source EAS sends a fourth message, and correspondingly, the source EES receives the fourth message. The fourth message includes an EAS discovery filter, a UEID, an ACR type, or indication information indicating that ACR corresponding to an application is ACR for service continuity planning or normal ACR.

For example, the fourth message may include an EAS discovery request message.

704: The source EES determines an instantiation status of the target EAS based on first indication information. That is, the source EES determines, based on an ACR type or indication information indicating that the ACR corresponding to the application is the ACR for service continuity planning or the normal ACR, whether the target EES of the ACR corresponding to the application requires an instantiated EAS, or requires an EAS that is instantiable but not instantiated yet. That is, the source EES determines whether a new EAS needs to be instantiated for the AC as the target EAS, and provides a subsequent service for the AC.

For example, when the ACR type is the normal ACR, the target EES has an instantiated EAS. When the ACR type is the ACR for service continuity planning, the target EE has an EAS that is instantiable but not instantiated yet.

705: The source EES sends a third message, and correspondingly, the ECS receives the third message.

For example, the third message may include a retrieve T-EES request message or a service provisioning request (service provisioning request) message, and the third message includes an EASID and indication information of the instantiation status of the required target EAS. The instantiation status of the target EAS may include instantiable but not instantiated yet or instantiated.

706: The ECS determines the target EES based on the indication information and instantiation status information of an EAS corresponding to the EES, that is, determines that the target EES has an EAS that is instantiable but not instantiated yet, or determines that the target EES has an instantiated EAS.

When the indication information indicates that the instantiation status of the target EAS is instantiable but not instantiated yet, the ECS determines that the target EES has an EAS that is instantiable but not instantiated yet. When the indication information indicates that the instantiation status of the target EAS is instantiated, the ECS determines that the target EES has an instantiated EAS.

It may be understood that, for a specific implementation of determining the target EES by the ECS in step 706, refer to specific descriptions of step 402 in FIG. 4A. Details are not described herein again.

707: The ECS sends first information, and correspondingly, the source EES receives the first information. The first information includes information about the target EES.

For example, the first information may be carried in a retrieve T-EES response (retrieve T-EES response) message or a service provisioning response (service provisioning response) message.

It may be understood that for specific descriptions of step 707, refer to specific descriptions of step 403 in FIG. 4A. Details are not described herein again.

708: The source EES sends a first message, and correspondingly, the target EES receives the first message. The first message includes an EASID of the target EAS and indication information of the instantiation status of the target EAS.

It may be understood that for specific descriptions of step 708, refer to specific descriptions of step 504 in FIG. 5B. Details are not described herein again.

709: The target EES determines the target EAS based on the indication information of the instantiation status of the target EAS and the EAS instantiation status information corresponding to the target EES. In other words, the target EES determines, based on the indication information of the instantiation status of the target EAS and the EAS instantiation status information corresponding to the target EES, whether to select, as the target EAS, an EAS that is instantiable but not instantiated yet.

For example, when the target EES determines to select an EAS that is instantiable but not instantiated yet, the target EES may trigger EAS instantiation to an OAM system.

It may be understood that, for a specific implementation of determining the target EAS by the target EES, refer to related descriptions of step 505 in FIG. 5B. Details are not described herein again.

710: The target EES sends a second message, and correspondingly, the source EES receives the second message. The second message includes the information about the target EAS. Optionally, the information about the target EAS may include the instantiation status information of the target EAS.

It may be understood that, when the target EAS is an EAS that is instantiable but not instantiated yet, the target EES may send instantiated EAS information to the source EES after the EAS is instantiated.

It may be understood that for specific descriptions of step 710, refer to specific descriptions of step 506 in FIG. 5B. Details are not described herein again.

Optionally, the method shown in FIG. 7 may further include step 711.

711: The source EES sends a fifth message, and correspondingly, the source EAS receives the fifth message. The fifth message includes the information about the target EAS. Optionally, the information about the target EAS may include the instantiation status information of the target EAS.

For example, the fifth message may include an EAS discovery response message.

It may be understood that for parameters (such as the first indication information, the first message, the second message, and the first information) in the method shown in FIG. 7, refer to related descriptions in FIG. 4A, FIG. 4B, FIG. 5A, or FIG. 5B. Details are not described herein again.

In some possible implementations, in the method shown in FIG. 7, the source EAS may be replaced with the AC, and the source EES may be replaced with the EEC. That is, the AC may perform the steps, functions, or the like performed by the source EAS in the method embodiment shown in FIG. 7, and the EEC may perform the steps, functions, or the like performed by the source EES in the method embodiment shown in FIG. 7.

In this embodiment of this application, the source EES or the EEC determines, based on the EAS instantiation status information and the ACR type corresponding to the application, whether to select an EAS that is instantiable but not instantiated yet. When the instantiated EAS cannot provide a good KPI, a new EAS may be instantiated for the AC, and an EAS with a better KPI can be provided for UE without increasing ACR latency.

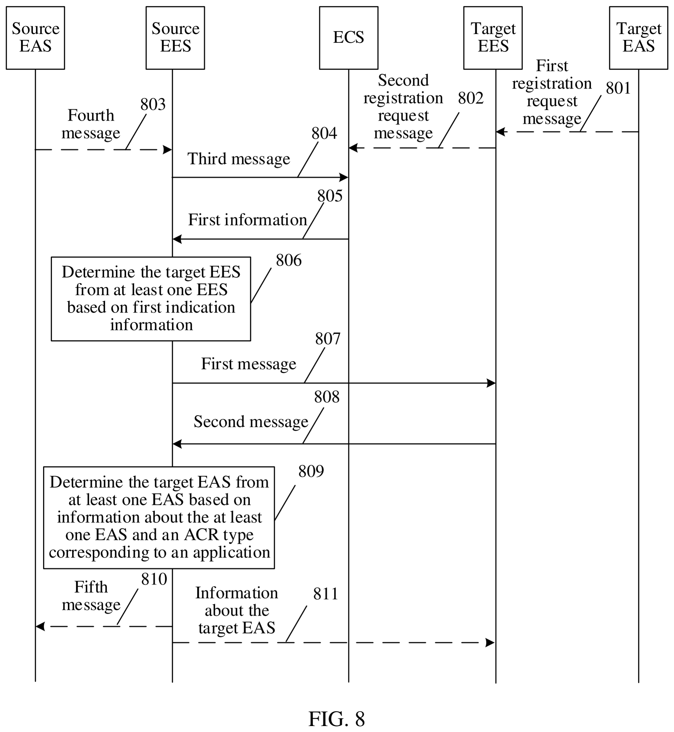

FIG. 8 is an interaction diagram of still another communication method according to an embodiment of this application. As shown in FIG. 8, the method may be applied to the communication system shown in FIG. 1, or the method is applied to a source EAS or an AC, a source EES or an EEC, an ECS, and a target EES. For example, the source EES may be the second EES described above, and the target EES may be the first EES described above.

It may be understood that, although a relay node is not involved in the method shown below, a person skilled in the art may learn that, when a receiving party and a sending party communicate with each other, a forwarding operation may be performed by the relay node. As shown in FIG. 8, the method includes but is not limited to the following steps.

In some implementations, the method shown in FIG. 8 may include step 801 and step 802.

801: A target EAS sends a first registration request message, and correspondingly, the target EES receives the first registration request message, where the first registration request message includes information about the EAS.

For example, after receiving the first registration request message, the target EES may further send a corresponding response message to the target EES.

802: The target EES sends a second registration request message to the ECS, and correspondingly, the ECS receives the second registration request message. The registration request message carries instantiation information of an EAS corresponding to the target EES.

Optionally, the method shown in FIG. 8 may include step 803.

803: The source EAS sends a fourth message, and correspondingly, the source EES receives the fourth message. The fourth message includes an EAS discovery filter, a UEID, an ACR type, or indication information indicating that ACR corresponding to an application is ACR for service continuity planning or normal ACR.

For example, the fourth message may include an EAS discovery request message.

804: The source EES sends a third message, and correspondingly, the ECS receives the third message.

The third message may include a retrieve T-EES request message. Optionally, the third message includes indication information of an instantiation status of the target EAS that needs to be obtained.

805: The ECS sends first information, and correspondingly, the source EES receives the first information, where the first information includes information about at least one EES. The information about the at least one EES includes an identifier and endpoint of the at least one EES.

For example, the information about the at least one EES further includes instantiation status information of an EAS associated with the at least one EES. The instantiation status information of the EAS indicates that the EAS is in an instantiated state, or the EAS is in an instantiable but not instantiated yet state.

For example, the first information may be carried in a retrieve T-EES response message.

It may be understood that for specific descriptions of step 805, refer to specific descriptions of step 405 in FIG. 4B. Details are not described herein again.

806: The source EES determines the target EES from the at least one EES based on the first indication information.

For example, the source EES determines, based on the ACR type or the indication information indicating that the ACR corresponding to the application is the ACR for service continuity planning or the normal ACR, whether to select, as the target EES, an EES corresponding to an EAS that is instantiable but not instantiated yet.

For example, the source EES may determine, based on the ACR type or the indication information indicating that the ACR corresponding to the application is the ACR for service continuity planning or the normal ACR and the instantiation status information of the EAS associated with the at least one EES, whether the source EES requires an EAS that is instantiable but not instantiated yet.

It may be understood that, for a specific implementation of determining the target EES by the source EES, refer to the specific implementation of determining the first EES by the ECS in step 402. Details are not described herein again.

It may be understood that for specific descriptions of step 806, refer to specific descriptions of step 406 in FIG. 4B. Details are not described herein again.

807: The source EES sends a first message, and correspondingly, the target EES receives the first message. The first message includes information such as an EASID.

For example, the first message may further include the indication information of the instantiation status of the target EAS that needs to be obtained.

It may be understood that for specific descriptions of step 807, refer to specific descriptions of step 501 in FIG. 5A. Details are not described herein again.

808: The target EES sends a second message, and correspondingly, the source EES receives the second message. The second message may include information about at least one EAS associated with the target EES. The information about the at least one EAS includes instantiation status information of the at least one EAS.

It may be understood that for specific descriptions of step 808, refer to specific descriptions of step 502 in FIG. 5A. Details are not described herein again.

809: The source EES determines the target EAS from the at least one EAS based on the information about the at least one EAS and the ACR type corresponding to the application.

For example, the source EES determines, based on the ACR type corresponding to the application or the indication information indicating that the ACR corresponding to the application is the ACR for service continuity planning or the normal ACR, whether to select an EAS that is instantiable but not instantiated yet, and determines the target EAS from the at least one EAS based on the instantiation status information of the at least one EAS.

It may be understood that for a specific implementation of determining the target EAS by the source EES, refer to the specific implementation in step 503 in FIG. 5A. Details are not described herein again.

Optionally, the method shown in FIG. 8 may further include step 811.

810: The source EES sends a fifth message, and correspondingly, the source EAS receives the fifth message. The fifth message includes information about the target EAS. The information about the target EAS may include instantiation status information of the target EAS.

For example, the fifth message may include an EAS response message.

811: When the source EES determines to select, as the target EAS, an EAS that is instantiable but not instantiated yet, the source EES sends the information about the target EAS to the target EES, and indicates the target EES to trigger an instantiation procedure of the target EAS. For example, the source EES may trigger instantiation of the target EAS through a selected EAS announcement (selected EAS announcement) procedure.

It may be understood that for parameters (such as the first indication information, the first message, the second message, and the first information) in the method shown in FIG. 8, refer to related descriptions in FIG. 4A, FIG. 4B, FIG. 5A, or FIG. 5B. Details are not described herein again.

In some possible implementations, in the method shown in FIG. 8, the source EAS may be replaced with the AC, and the source EES may be replaced with the EEC. That is, the AC may perform the steps, functions, or the like performed by the source EAS in the method embodiment shown in FIG. 8, and the EEC may perform the steps, functions, or the like performed by the source EES in the method embodiment shown in FIG. 8.

In this embodiment of this application, the source EES or the EEC determines, based on the EAS instantiation status information and the ACR type corresponding to the application, whether to select an EAS that is instantiable but not instantiated yet. When an instantiated EAS cannot provide a good KPI, a new EAS may be instantiated for the AC, and an EAS with a better KPI can be provided for UE without increasing ACR latency.

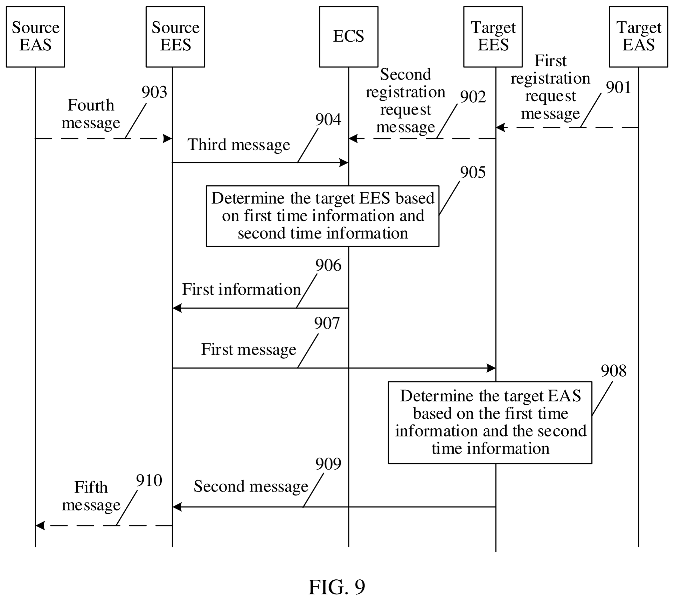

FIG. 9 is an interaction diagram of still another communication method according to an embodiment of this application. As shown in FIG. 9, the method may be applied to the communication system shown in FIG. 1, or the method is applied to a source EAS or an AC, a source EES or an EEC, an ECS, and a target EES. For example, the source EES may be the second EES described above, and the target EES may be the first EES described above. It may be understood that, although a relay node is not involved in the method shown below, a person skilled in the art may learn that, when a receiving party and a sending party communicate with each other, a forwarding operation may be performed by the relay node. As shown in FIG. 9, the method includes but is not limited to the following steps.

In some implementations, the method shown in FIG. 9 may include step 901 and step 902.

901: A target EAS sends a first registration request message, and correspondingly, the target EES receives the first registration request message, where the first registration request message includes information about the EAS.

For example, after receiving the first registration request message, the target EES may further send a corresponding response message to the target EES.

902: The target EES sends a second registration request message to the ECS, and correspondingly, the ECS receives the second registration request message. The registration request message carries instantiation information of an EAS corresponding to the target EES and time required for EAS instantiation.

For example, the target EES maintains a list of EASs that are instantiable but not instantiated yet, and the list of EASs that are instantiable but not instantiated yet includes time required for instantiating an EAS that is instantiable but not instantiated yet.

Optionally, the method shown in FIG. 9 may include step 903.

903: The source EAS sends a fourth message, and correspondingly, the source EES receives the fourth message. The fourth message includes an EAS discovery filter, a UEID, an ACID, and first time information. The first time information indicates execution time of ACR for service continuity planning. That is, the first time information indicates prediction expiration time. The prediction expiration time indicates time at which a terminal device corresponding to an application is predicted to reach a predicted or expected location or a service area of the target EAS at the latest.

Optionally, the fourth message may further include indication information indicating that ACR corresponding to the application is the ACR for service continuity planning.

For example, the fourth message may include an EAS discovery request message.

904: The source EES sends a third message, and correspondingly, the ECS receives the third message. The third message includes an EAS discovery filter, a UEID, an ACID, and the first time information.

Optionally, the third message may further include the indication information indicating that the ACR corresponding to the application is the ACR for service continuity planning.

It may be understood that for specific descriptions of step 904, refer to specific descriptions of step 401 in FIG. 4A. Details are not described herein again.

905: The ECS determines the target EES based on the first time information and second time information. That is, the ECS determines, based on the execution time of the ACR for service continuity and the time information required for EAS instantiation, whether to select, as the target EES, an EES corresponding to an EAS that is instantiable but not instantiated yet.

For example, the ECS may determine, based on the indication information indicating that the ACR corresponding to the application is the ACR for service continuity planning, the first time information, and the time information required for EAS instantiation, whether to select, as the target EES, an EES corresponding to an EAS that is instantiable but not instantiated yet.

When the execution time of the ACR for service continuity planning indicated by the first time information is less than the time required for EAS instantiation, performing EAS instantiation during the ACR further increases ACR latency, and further increases service interruption latency or time of poor service performance. Therefore, in this case, the ECS selects an EES corresponding to an instantiated EAS as the target EES.

When the execution time of the ACR for service continuity planning indicated by the first time information is greater than the time required for EAS instantiation, performing EAS instantiation during the ACR does not cause an increase in ACR latency. Therefore, in this case, the ECS may select, as the target EES, an EES corresponding to an EAS that is instantiable but not instantiated yet.

It may be understood that, when the execution time of the ACR for service continuity planning is equal to the time required for EAS instantiation, the ECS may select an EES corresponding to an EAS that is instantiable but not instantiated yet, or may select an EES corresponding to an instantiated EAS.

It may be understood that for specific descriptions of step 905, refer to specific descriptions of step 402 in FIG. 4A. Details are not described herein again.

906: The ECS sends first information, and correspondingly, the source EES receives the first information. The first information includes information about the target EES. The information about the target EES includes an EASID of an EAS corresponding to the target EES.

Optionally, the information about the target EES may further include instantiation status information of the EAS corresponding to the target EES. For example, the EAS corresponding to the target EES is an instantiated EAS, or the EAS corresponding to the target EES is an EAS that is instantiable but not instantiated yet.

For example, the information about the target EES further includes identification information (EES ID) and EES endpoint of the target EES.

It may be understood that for specific descriptions of step 906, refer to specific descriptions of step 403 in FIG. 4A. Details are not described herein again.

907: The source EES sends a first message, and correspondingly, the target EES receives the first message. The first message includes an EAS discovery filter and the first time information.

Optionally, the first message may further include the indication information indicating that the ACR corresponding to the application is the ACR for service continuity planning.

It may be understood that for specific descriptions of step 907, refer to specific descriptions of step 504 in FIG. 5B. Details are not described herein again.

908: The target EES determines the target EAS based on the first time information and the second time information. That is, the target EES determines, based on the first time information and instantiation time of the EAS corresponding to the target EES, whether to select, as the target EAS, an EAS that is instantiable but not instantiated yet.

For example, the target EES may determine, based on the indication information indicating that the ACR corresponding to the application is the ACR for service continuity planning, the first time information, and the instantiation time of the EAS corresponding to the target EES, whether to select an EAS that is instantiable but not instantiated yet.

For example, when the target EES may select an EAS that is instantiable but not instantiated yet, the target EES triggers an EAS instantiation procedure to an OAM system.

It may be understood that, for a specific implementation of determining the target EAS by the target EES, refer to the specific implementation in step 505 in the method shown in FIG. 5B. Details are not described herein again.

909: The target EES sends a second message, and correspondingly, the source EES receives the second message. The second message includes the information about the target EAS. The information about the target EAS may include instantiation status information of the target EAS. For example, the information about the target EAS may further include an EAS profile. The EAS profile includes an EAS ID and EAS endpoint.

It may be understood that, when the target EAS is an EAS that is instantiable but not instantiated yet, the target EES may send instantiated target EAS information to the source EES after the target EAS is instantiated.

It may be understood that for specific descriptions of step 909, refer to specific descriptions of step 506 in FIG. 5B. Details are not described herein again.

Optionally, the method shown in FIG. 9 further includes step 910.

910: The source EES sends a fifth message, and correspondingly, the source EAS receives the fifth message. The fifth message includes the information about the target EAS. The information about the target EAS may include the instantiation status information of the target EAS.

For example, the fifth message may include an EAS discovery response message.

It may be understood that for specific descriptions of parameters (such as the first indication information, the first time information, the second time information, the first message, the second message, and the first information) in the method shown in FIG. 9, refer to related descriptions in FIG. 4A, FIG. 4B, FIG. 5A, or FIG. 5B. Details are not described herein again.

In some possible implementations, in the method shown in FIG. 9, the source EAS may be replaced with the AC, and the source EES may be replaced with the EEC. That is, the AC may perform the steps, functions, or the like performed by the source EAS in the method embodiment shown in FIG. 9, and the EEC may perform the steps, functions, or the like performed by the source EES in the method embodiment shown in FIG. 9.

In this embodiment of this application, the ECS and the target EES may select, based on execution time (prediction expiration time) of the ACR for service continuity and EAS instantiation latency, an instantiated EAS or an EAS that is instantiable but not instantiated yet. When the execution time of the ACR for service continuity planning is greater than the instantiation time of the EAS, selecting an instantiated EAS can avoid an increase in ACR latency and time of poor service performance. When the execution time of the ACR for service continuity planning is less than the instantiation time of the EAS, an EAS that is instantiable but not instantiated yet is selected, that is, a new EAS is instantiated for the AC, so that an EAS with a better KPI can be provided for the AC, and better ACR and edge computing services can be provided for UE.

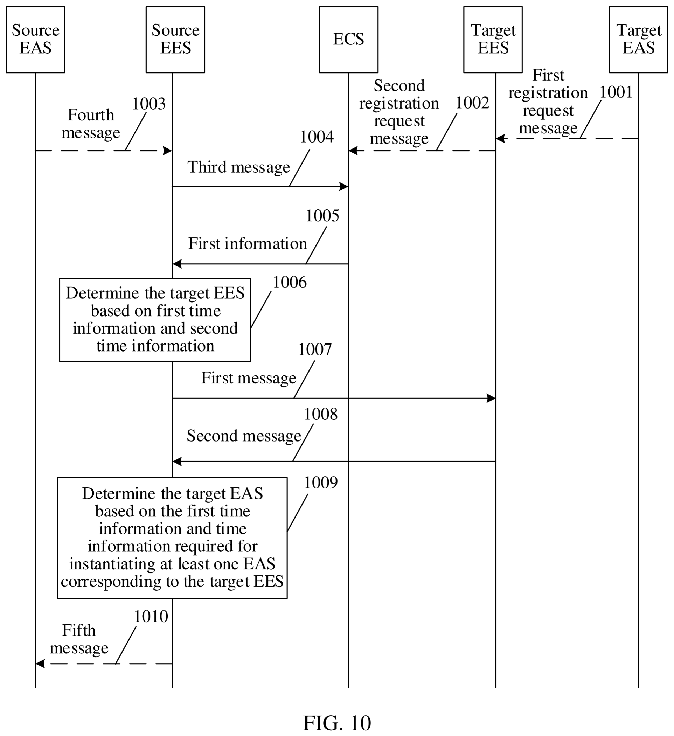

FIG. 10 is an interaction diagram of still another communication method according to an embodiment of this application. As shown in FIG. 10, the method may be applied to the communication system shown in FIG. 1, or the method is applied to a source EAS or an AC, a source EES or an EEC, an ECS, and a target EES. For example, the source EES may be the second EES described above, and the target EES may be the first EES described above.

It may be understood that, although a relay node is not involved in the method shown below, a person skilled in the art may learn that, when a receiving party and a sending party communicate with each other, a forwarding operation may be performed by the relay node. As shown in FIG. 10, the method includes but is not limited to the following steps.

In some implementations, the method shown in FIG. 10 may include step 1001 and step 1002.

1001: A target EAS sends a first registration request message, and correspondingly, the target EES receives the first registration request message, where the first registration request message includes information about the EAS.

For example, after receiving the first registration request message, the target EES may further send a corresponding response message to the target EES.

1002: The target EES sends a second registration request message to the ECS, and correspondingly, the ECS receives the second registration request message. The second registration request message carries instantiation information of an EAS corresponding to the target EES and time required for EAS instantiation.

For example, the target EES maintains a list of EASs that are instantiable but not instantiated yet, and the list of EASs that are instantiable but not instantiated yet includes time required for instantiating an EAS that is instantiable but not instantiated yet.

Optionally, the method shown in FIG. 10 may include step 1003.

1003: The source EAS sends a fourth message, and correspondingly, the source EES receives the fourth message. The fourth message includes an EAS discovery filter, a UEID, an ACID, and first time information. The first time information indicates execution time of ACR for service continuity planning. That is, the first time information indicates prediction expiration time. The prediction expiration time indicates time at which a terminal device corresponding to an application is predicted to reach a predicted or expected location or a service area of the target EAS at the latest.

Optionally, the fourth message may further include indication information indicating that ACR corresponding to the application is the ACR for service continuity planning.

For example, the fourth message may include an EAS discovery request message.

1004: The source EES sends a third message, and correspondingly, the ECS receives the third message.

1005: The ECS sends first information, and correspondingly, the source EES receives the first information. The first information includes second time information and information about at least one EES, and the second time information indicates time information required for instantiating an EAS corresponding to the at least one EES. The information about the at least one EES includes identification information (for example, an EASID) and instantiation status information of the EAS corresponding to the at least one EES.

It may be understood that for specific descriptions of step 1005, refer to specific descriptions of step 405 in FIG. 4B. Details are not described herein again.

1006: The source EES determines the target EES based on the first time information and the second time information. That is, the source EES determines, based on the first time information and the time information required for instantiating the EAS corresponding to the at least one EES, whether to select, as the target EES, an EES corresponding to an EAS that is instantiable but not instantiated yet.

For example, the source EES may determine, based on the indication information indicating that the ACR corresponding to the application is the ACR for service continuity planning, the first time information, and the time information required for EAS instantiation, whether to select, as the target EES, an EES corresponding to an EAS that is instantiable but not instantiated yet.

When the execution time of the ACR for service continuity planning indicated by the first time information is less than the time required for EAS instantiation, performing EAS instantiation during the ACR further increases ACR latency, and further increases service interruption latency or time of poor service performance. Therefore, in this case, the source EES selects an EES corresponding to an instantiated EAS as the target EES.

When the execution time of the ACR for service continuity planning indicated by the first time information is greater than the time required for EAS instantiation, performing EAS instantiation during the ACR does not cause an increase in ACR latency. Therefore, in this case, the source EES may select, as the target EES, an EES corresponding to an EAS that is instantiable but not instantiated yet.

It may be understood that, when the execution time of the ACR for service continuity planning is equal to the time required for EAS instantiation, the source EES may select an EES corresponding to an EAS that is instantiable but not instantiated yet, or may select an EES corresponding to an instantiated EAS.

It may be understood that for specific descriptions of step 1006, refer to specific descriptions of step 406 in FIG. 4B. Details are not described herein again.

1007: The source EES sends a first message, and correspondingly, the target EES receives the first message. The first message includes an EAS discovery filter.

It may be understood that for specific descriptions of step 1007, refer to specific descriptions of step 501 in FIG. 5A. Details are not described herein again.

1008: The target EES sends a second message, and correspondingly, the source EES receives the second message. The second message includes information about the at least one EAS corresponding to the target EES, and the information about the at least one EAS includes the instantiation information of the at least one EAS and the time information required for instantiation.

It may be understood that for specific descriptions of step 1008, refer to specific descriptions of step 502 in FIG. 5A. Details are not described herein again.

1009: The source EES determines the target EAS based on the first time information and the time information required for instantiating the at least one EAS corresponding to the target EES. That is, the source EES determines, based on the first time information and the time information required for instantiating the at least one EAS corresponding to the target EES, whether to select, as the target EAS, an EAS that is instantiable but not instantiated yet.

For example, the source EES may determine, based on the indication information indicating that the ACR corresponding to the application is the ACR for service continuity planning, the first time information, and the instantiation time of the EAS corresponding to the target EES, whether to select an EAS that is instantiable but not instantiated yet.

When the execution time of the ACR for service continuity planning indicated by the first time information is less than the time required for instantiating each EAS that is instantiable but not instantiated yet in the at least one EAS, performing EAS instantiation during the ACR further increases ACR latency, and further increases service interruption latency or time of poor service performance. Therefore, in this case, the source EES selects an instantiated EAS.

When the execution time of the ACR for service continuity planning indicated by the first time information is greater than time required for instantiating any EAS in the at least one EAS, performing EAS instantiation during the ACR does not increase ACR latency. Therefore, in this case, the source EES may select an EAS that is instantiable but not instantiated yet.

For example, after determining the target EAS, the source EES may send information about the target EAS to the target EES. If the target EAS is an EAS hat is instantiable but not instantiated yet, the target EES triggers an EAS instantiation procedure to an OAM system.

It may be understood that for a specific implementation of determining the target EAS by the source EES, refer to the specific implementation in step 503 in FIG. 5A. Details are not described herein again.

Optionally, the method shown in FIG. 10 further includes step 1010.

1010: The source EES sends a fifth message, and correspondingly, the source EAS receives the fifth message. The fifth message includes the information about the target EAS. The information about the target EAS may include the instantiation status information of the target EAS.

For example, the fifth message may include an EAS response message.

It may be understood that for specific descriptions of parameters (such as the first indication information, the first time information, the second time information, the first message, the second message, and the first information) in the method shown in FIG. 10, refer to related descriptions in FIG. 4A, FIG. 4B, FIG. 5A, or FIG. 5B. Details are not described herein again.

In some possible implementations, in the method shown in FIG. 10, the source EAS may be replaced with the AC, and the source EES may be replaced with the EEC. That is, the AC may perform the steps, functions, or the like performed by the source EAS in the method embodiment shown in FIG. 10, and the EEC may perform the steps, functions, or the like performed by the source EES in the method embodiment shown in FIG. 10.

In this embodiment of this application, the source EES or the EEC selects, based on the execution time of the ACR for service continuity planning and the instantiation time of the EAS, an instantiated EAS or an EAS that is instantiable but not instantiated yet. When the execution time of the ACR for service continuity planning is less than the instantiation time of the EAS, selecting an instantiated EAS can avoid an increase in ACR latency and time of poor service performance. When the execution time of the ACR for service continuity planning is greater than the instantiation time of the EAS, an EAS that is instantiable but not instantiated yet is selected, that is, a new EAS is instantiated for the AC, so that an EAS with a better KPI can be provided for the AC, and better ACR and edge computing services can be provided for UE.

It should be understood that a parameter (for example, including but not limited to the first indication information, the first information, the first time information, or the second time information) in this embodiment of this application is not limited to a specific embodiment, but is applicable to all embodiments of this application. Details are not described in this application again.

A communication apparatus provided in an embodiment of this application is described below.

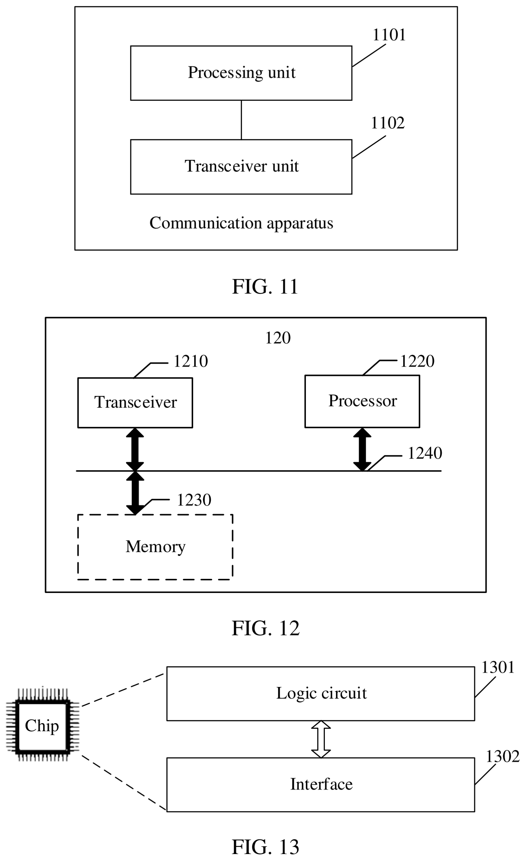

In this application, the communication apparatus is divided into functional modules based on the foregoing method embodiments. For example, each functional module may be divided to each corresponding function, or two or more functions may be integrated into one processing module. The integrated module may be implemented in a form of hardware, or may be implemented in a form of a software functional module. It should be noted that, in this application, division into the modules is an example, and is merely a logical function division. In actual implementation, another division manner may be used. The following describes in detail the communication apparatus in embodiments of this application with reference to FIG. 11 to FIG. 13.

FIG. 11 is a diagram of a structure of a communication apparatus according to an embodiment of this application. As shown in FIG. 11, the communication apparatus includes a processing unit 1101 and a transceiver unit 1102. The transceiver unit 1102 may implement a corresponding communication function, and the processing unit 1101 is configured to process data. For example, the transceiver unit 1102 may also be referred to as a communication interface or a communication unit.

In some embodiments of this application, the communication apparatus may be configured to perform an action performed by the ECS in the foregoing method embodiments. In this case, the communication apparatus may be the ECS or a component (such as a chip or a system) that can be configured in the ECS. The transceiver unit 1102 is configured to perform a transmitting and receiving related operation of the ECS in the foregoing method embodiments. The processing unit 1101 is configured to perform a processing related operation of the ECS in the foregoing method embodiments.

For example, the transceiver unit 1102 is configured to receive first indication information, and the processing unit 1101 is configured to determine a first EES based on the first indication information.

Optionally, the transceiver unit 1102 is further configured to send first information.

In some other embodiments of this application, the communication apparatus may be configured to perform an action performed by the second EES in the foregoing method embodiments. In this case, the communication apparatus may be the second EES or a component (such as a chip or a system) that can be configured in the second EES. The transceiver unit 1102 is configured to perform a transmitting and receiving related operation of the second EES in the foregoing method embodiments. The processing unit 1101 is configured to perform a processing related operation of the second EES in the foregoing method embodiments.

For example, the transceiver unit 1102 is configured to: output a first message and input a second message.

Optionally, the processing unit 1101 is configured to determine a first EAS.

Optionally, the transceiver unit 1102 is further configured to: output a third message and receive first information.

Optionally, the processing unit 1101 is further configured to determine a first EES.

It may be understood that for specific descriptions of determining the first EAS or the first EES by the processing unit 1101, refer to the foregoing method embodiments. Details are not described herein again.

In some embodiments of this application, the communication apparatus may be configured to perform an action performed by the EEC in the foregoing method embodiments. In this case, the communication apparatus may be the EEC or a component (such as a chip or a system) that can be configured in the EEC. The transceiver unit 1102 is configured to perform a transmitting and receiving related operation of the EEC in the foregoing method embodiments. The processing unit 1101 is configured to perform a processing related operation of the EEC in the foregoing method embodiments.

For example, the transceiver unit 1102 is configured to: output a first message and input a second message.

Optionally, the processing unit 1101 is configured to determine a first EAS.

Optionally, the transceiver unit 1102 is further configured to: output a third message and receive first information.

Optionally, the processing unit 1101 is further configured to determine a first EES.

It may be understood that for specific descriptions of determining the first EAS or the first EES by the processing unit 1101, refer to the foregoing method embodiments. Details are not described herein again.

In some other embodiments of this application, the communication apparatus may be configured to perform an action performed by the first EES in the foregoing method embodiments. In this case, the communication apparatus may be the first EES or a component (such as a chip or a system) that can be configured in the first EES. The transceiver unit 1102 is configured to perform a transmitting and receiving related operation of the first EES in the foregoing method embodiments. The processing unit 1101 is configured to perform a processing related operation of the first EES in the foregoing method embodiments.

For example, the transceiver unit 1102 is configured to: input a first message and output a second message.

Optionally, the processing unit 1101 is configured to determine a first EAS.

Optionally, the processing unit 1101 is further configured to trigger an instantiation procedure of the first EAS.

Optionally, the communication apparatus may further include a storage unit. The storage unit may be configured to store instructions and/or data. The processing unit 1101 may read the instructions and/or the data in the storage unit, so that the communication apparatus implements the foregoing method embodiments.

It may be understood that the specific descriptions of the transceiver unit and the processing unit in embodiments of this application are merely examples. For specific functions, steps, or the like performed by the transceiver unit and the processing unit, refer to the foregoing method embodiments. Details are not described herein again.

In the foregoing embodiments, for descriptions of the first indication information, the first EES, the first EAS, the first information, the first message, the second message, the third message, and the like, refer to the descriptions in the method embodiments. Details are not described herein again.

The foregoing describes the communication apparatus in embodiments of this application. The following describes a possible product form of the communication apparatus. It should be understood that a product in any form that has a function of the communication apparatus in FIG. 11 falls within the protection scope of embodiments of this application. It should be further understood that the following descriptions are merely examples, and the product form of the communication apparatus in embodiments of this application is not limited thereto.

In a possible implementation, in the communication apparatus shown in FIG. 11, the processing unit 1101 may be one or more processors, and the transceiver unit 1102 may be a transceiver, or the transceiver unit 1102 may be a sending unit and a receiving unit. The sending unit may be a transmitter, and the receiving unit may be a receiver. The sending unit and the receiving unit are integrated into one component, for example, a transceiver. In this embodiment of this application, the processor and the transceiver may be coupled, or the like. A manner of connecting the processor and the transceiver is not limited in this embodiment of this application. In a process of performing the foregoing methods, a process of sending information in the foregoing methods may be understood as a process of outputting the information by the processor. When outputting the information, the processor outputs the information to a transceiver, so that the transceiver transmits the information. After the information is output by the processor, other processing may further need to be performed on the information before the information arrives at the transceiver. Similarly, a process of receiving information in the foregoing methods may be understood as a process of receiving the input information by the processor. When the processor receives the input information, the transceiver receives the information, and inputs the information to the processor. Further, after the transceiver receives the information, other processing may need to be performed on the information, and then processed information is received by the processor.

As shown in FIG. 12, a communication apparatus 120 includes one or more processors 1220 and a transceiver 1210.

In some embodiments of this application, the communication apparatus may be configured to perform steps, functions, or the like performed by the ECS in the foregoing method embodiments.

The transceiver 1210 is configured to receive first indication information. The processor 1220 is configured to determine a first EES based on the first indication information.

Optionally, the transceiver 1210 is further configured to send first information.

In some other embodiments of this application, the communication apparatus may be configured to perform steps, functions, or the like performed by the second EES in the foregoing method embodiments.

The transceiver 1210 is configured to: output a first message and input a second message.

Optionally, the processor 1220 is configured to determine a first EAS.

Optionally, the transceiver 1210 is further configured to: output a third message and receive first information.

Optionally, the processor 1220 is further configured to determine a first EES.

It may be understood that specific descriptions of the transceiver and the processor in this embodiment of this application are merely examples. For specific functions, steps, or the like performed by the transceiver and the processor, refer to the foregoing method embodiments. Details are not described herein again.

In some other embodiments of this application, the communication apparatus may be an EEC or a component that may be configured in the EEC. For example, the transceiver 1210 may be configured to: output a first message and input a second message.

In some other embodiments of this application, the communication apparatus may be a first EES or a component that may be configured in the first EES. For example, the transceiver 1210 may be configured to: receive a first message and send a second message.

In the foregoing embodiments, for descriptions of the first indication information, the first EES, the first EAS, the first information, the first message, the second message, the third message, and the like, refer to the descriptions in the method embodiments. Details are not described herein again.

In various implementations of the communication apparatus shown in FIG. 12, the transceiver may include a receiver and a transmitter. The receiver is configured to perform a receiving function (or operation) and the transmitter is configured to perform a transmitting function (or operation). The transceiver is configured to communicate with another device/apparatus through a transmission medium.

Optionally, the communication apparatus 120 may further include one or more memories 1230, configured to store program instructions, data, and/or the like. The memory 1230 is coupled to the processor 1220. The coupling in this embodiment of this application may be an indirect coupling or a communication connection between apparatuses, units, or modules in an electrical form, a mechanical form, or another form, and is used for information exchange between the apparatuses, the units, or the modules. The processor 1220 may cooperate with the memory 1230. The processor 1220 may execute the program instructions stored in the memory 1230. Optionally, at least one of the one or more memories may be included in the processor.

A specific connection medium between the transceiver 1210, the processor 1220, and the memory 1230 is not limited in this embodiment of this application. In this embodiment of this application, in FIG. 12, the memory 1230, the processor 1220, and the transceiver 1210 are connected through a bus 1240. The bus is denoted by a bold line in FIG. 12. A connection manner between other components is merely an example for description, and is not used as a limitation. The bus may be classified into an address bus, a data bus, a control bus, and the like. For ease of representation, only one bold line indicates the bus in FIG. 12, but this does not mean that there is only one bus or only one type of bus.

In this embodiment of this application, the processor may be a general-purpose processor, a digital signal processor, an application-specific integrated circuit, a field programmable gate array or another programmable logic device, a discrete gate or transistor logic device, a discrete hardware component, or the like. The processor can implement or execute the methods, the steps, and the logical block diagrams disclosed in embodiments of this application. The general purpose processor may be a microprocessor or any conventional processor or the like. The steps of the methods disclosed in combination with embodiments of this application may be directly implemented by a hardware processor, or may be implemented by using a combination of hardware and software modules in the processor, or the like.

In this embodiment of this application, the memory may include but is not limited to a non-volatile memory such as a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), or a portable read-only memory (Compact Disc Read-Only Memory, CD-ROM). The memory is any storage medium that can be used to carry or store program code in a form of instructions or a data structure and that can be read and/or written by a computer (for example, the communication apparatus shown in this application). However, this application is not limited thereto. The memory in embodiments of this application may alternatively be a circuit or any other apparatus that can implement a storage function, and is configured to store the program instructions and/or the data.

For example, the processor 1220 is mainly configured to: process a communication protocol and communication data, control the entire communication apparatus, execute a software program, and process data of the software program. The memory 1230 is mainly configured to store the software program and the data. The transceiver 1210 may include a control circuit and an antenna. The control circuit is mainly configured to: convert a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

After the communication apparatus is powered on, the processor 1220 may read the software program in the memory 1230, interpret and execute instructions of the software program, and process data of the software program. When data needs to be sent wirelessly, the processor 1220 performs baseband processing on the to-be-sent data, and then outputs a baseband signal to a radio frequency circuit. The radio frequency circuit performs radio frequency processing on the baseband signal, and then sends, through the antenna, a radio frequency signal in an electromagnetic wave form. When the data is sent to the communication apparatus, the radio frequency circuit receives the radio frequency signal through the antenna, converts the radio frequency signal into a baseband signal, and outputs the baseband signal to the processor 1220. The processor 1220 converts the baseband signal into data and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

It may be understood that the communication apparatus shown in this embodiment of this application may further have more components and the like than those shown in FIG. 12. This is not limited in this embodiment of this application. The methods performed by the processor and the transceiver are merely examples. For specific steps performed by the processor and the transceiver, refer to the methods described above.

**In** another possible implementation, in the communication apparatus shown in FIG. 11, the processing unit 1101 may be one or more logic circuits, and the transceiver unit 1102 may be an input/output interface that is also referred to as a communication interface, an interface circuit, an interface, or the like. Alternatively, the transceiver unit 1102 may be a sending unit and a receiving unit, where the sending unit may be an output interface, the receiving unit may be an input interface, and the sending unit and the receiving unit are integrated into one unit, for example, an input/output interface. As shown in FIG. 13, a communication apparatus shown in FIG. 13 includes a logic circuit 1301 and an interface 1302. In other words, the processing unit 1101 may be implemented by using the logic circuit 1301, and the transceiver unit 1102 may be implemented by using the interface 1302. The logic circuit 1301 may be a chip, a processing circuit, an integrated circuit, a system on chip (system on chip, SoC), or the like. The interface 1302 may be a communication interface, an input/output interface, a pin, or the like. For example, FIG. 13 shows an example in which the communication apparatus is a chip. The chip includes the logic circuit 1301 and the interface 1302.

In this embodiment of this application, the logic circuit and the interface may be further coupled to each other. A specific manner of connection between the logic circuit and the interface is not limited in this embodiment of this application.

In some embodiments of this application, the communication apparatus may be configured to perform steps, functions, or the like performed by the ECS in the foregoing method embodiments.

For example, the interface 1302 is configured to input first indication information, and the logic circuit 1301 is configured to determine a first EES based on the first indication information.

In some other embodiments of this application, the communication apparatus may be configured to perform steps, functions, or the like performed by the second EES in the foregoing method embodiments.

For example, the interface 1302 is configured to: output a first message and input a second message.

In some other embodiments of this application, the communication apparatus may be configured to perform steps, functions, or the like performed by the EEC in the foregoing method embodiments.

For example, the interface 1302 is configured to: output a first message and input a second message.

In some other embodiments of this application, the communication apparatus may be configured to perform steps, functions, or the like performed by the first EES in the foregoing method embodiments.

For example, the interface 1302 is configured to: input a first message and output a second message.

It may be understood that specific descriptions of the logic circuit and the interface in this embodiment of this application are merely examples. For specific functions, steps, or the like performed by the logic circuit and the interface, refer to the foregoing method embodiments. Details are not described herein again.

In the foregoing embodiments, for descriptions of the first indication information, the first EES, the first EAS, the first information, the first message, the second message, the third message, and the like, refer to the descriptions in the method embodiments. Details are not described herein again.

It may be understood that the communication apparatus shown in this embodiment of this application may implement the methods provided in embodiments of this application in a form of hardware, or may implement the methods provided in embodiments of this application in a form of software. This is not limited in this embodiment of this application.

An embodiment of this application further provides a communication system. The communication system includes at least two of the following: an ECS, a first EES, a second EES, or an EEC. The ECS, the first EES, the second EES, or the EEC may be configured to perform the method in any one of the foregoing embodiments.

In addition, this application further provides a computer program. The computer program is used to implement operations and/or processing performed by the ECS in the methods provided in this application.

This application further provides a computer program. The computer program is used to implement operations and/or processing performed by the first EES in the methods provided in this application.

This application further provides a computer program. The computer program is used to implement operations and/or processing performed by the second EES in the methods provided in this application.

This application further provides a computer program. The computer program is used to implement operations and/or processing performed by the EEC in the methods provided in this application.

This application further provides a computer-readable storage medium. The computer-readable storage medium stores computer code. When the computer code is run on a computer, the computer performs operations and/or processing performed by the ECS in the methods provided in this application.

This application further provides a computer-readable storage medium. The computer-readable storage medium stores computer code. When the computer code is run on a computer, the computer performs operations and/or processing performed by the first EES in the methods provided in this application.

This application further provides a computer-readable storage medium. The computer-readable storage medium stores computer code. When the computer code is run on a computer, the computer performs operations and/or processing performed by the second EES in the methods provided in this application.

This application further provides a computer-readable storage medium. The computer-readable storage medium stores computer code. When the computer code is run on a computer, the computer performs operations and/or processing performed by the EEC in the methods provided in this application.

This application further provides a computer program product. The computer program product includes computer code or a computer program. When the computer code or the computer program is run on a computer, the operations and/or processing performed by the ECS in the methods provided in this application are/is performed.

This application further provides a computer program product. The computer program product includes computer code or a computer program. When the computer code or the computer program is run on a computer, the operations and/or processing performed by the first EES in the methods provided in this application are/is performed.

This application further provides a computer program product. The computer program product includes computer code or a computer program. When the computer code or the computer program is run on a computer, the operations and/or processing performed by the second EES in the methods provided in this application are/is performed.

This application further provides a computer program product. The computer program product includes computer code or a computer program. When the computer code or the computer program is run on a computer, the operations and/or processing performed by the EEC in the methods provided in this application are/is performed.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected based on an actual requirement to implement the technical effect of the solutions provided in embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of software product. The computer software product is stored in a readable storage medium and includes several instructions for instructing a computer device (which may be a personal computer, a server, or a network device) to perform all or some of the steps of the methods described in embodiments of this application. The readable storage medium includes various media that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by an edge configuration server ECS, first indication information, wherein the first indication information is used to determine a first edge enabler server EES corresponding to a first edge application server EAS, and the first EAS is a target EAS of application context relocation ACR corresponding to an application; and
determining, by the ECS, the first EES based on the first indication information.

2. The method according to claim 1, wherein the first indication information comprises at least one of the following information: an ACR type corresponding to the application, indication information indicating that the ACR corresponding to the application is ACR for service continuity planning or normal ACR, indication information of an instantiation status of the first EAS, and first time information, and the first time information indicates execution time of the ACR for service continuity planning.

3. The method according to claim 1 or 2, wherein determining, by the ECS, the first edge enabler server EES based on the first indication information comprises:
determining, by the ECS, the first EES based on the first indication information and at least one of the following: an instantiation status of an EAS associated with at least one EES corresponding to the ECS, and second time information, wherein the second time information indicates instantiation time of the first EAS.

4. The method according to claim 3, wherein when the ACR type comprises a normal ACR type, or the first indication information comprises indication information indicating that the ACR corresponding to the application is the normal ACR, or the instantiation status of the first EAS comprises an instantiated state, the first EES corresponds to an instantiated EAS; or
when the ACR type comprises an ACR type for service continuity planning, or the first indication information comprises indication information indicating that the ACR corresponding to the application is the ACR for service continuity planning, or the instantiation status of the first EAS comprises an instantiable but not instantiated yet state, the first EES corresponds to an EAS that is instantiable but not instantiated yet.

5. The method according to any one of claims 1 to 4, wherein the method further comprises:
sending, by the ECS, first information, wherein the first information comprises at least one of the following: information about the at least one EES corresponding to the ECS, instantiation status information of the EAS associated with the at least one EES corresponding to the ECS, and information about the first EES, and the at least one EES comprises the first EES.

6. The method according to any one of claims 1 to 5, wherein the first indication information is from a second EES or an edge enabler client EEC.

7. A communication method, comprising:
sending, by a second edge enabler server EES, a first message to a first EES, wherein the first message is used to obtain information about a first edge application server EAS, the first message comprises first indication information, the first EAS is a target EAS of application context relocation ACR corresponding to an application, and the first indication information is used to determine the first EAS; and
receiving, by the second EES, a second message from the first EES, wherein the second message comprises information about at least one EAS, and the at least one EAS comprises the first EAS.

8. The method according to claim 7, wherein the first indication information comprises at least one of the following information: an application context relocation ACR type corresponding to the application, indication information indicating that the ACR corresponding to the application is ACR for service continuity planning or normal ACR, indication information of an instantiation status of the first EAS, and first time information, and the first time information indicates execution time of the ACR for service continuity planning.

9. The method according to claim 7 or 8, wherein the method further comprises:
determining, by the second EES, the first EAS from the at least one EAS based on at least one of the following information: the ACR type, instantiation status information of the first EAS, and the information about the at least one EAS.

10. The method according to claim 7 or 8, wherein the information about the first EAS comprises second time information, the second time information indicates instantiation time of the first EAS, and the method further comprises:
determining, by the second EES, the first EAS from the at least one EAS based on the first time information and/or the second time information.

11. The method according to any one of claims 7 to 10, wherein the method further comprises:
sending, by the second EES, a third message to an edge configuration server ECS, wherein the third message comprises at least one of the following information: the first indication information and application information; and
receiving, by the second EES, first information from the ECS, wherein the first information comprises at least one of the following information: information about at least one EES, instantiation status information of an EAS corresponding to the at least one EES, and instantiation time information of the EAS corresponding to the at least one EES, and the at least one EES comprises the first EES.

12. The method according to claim 11, wherein the method further comprises:
determining, by the second EES, the first EES from the at least one EES based on at least one of the application information, the first indication information, the information about the at least one EES, and the instantiation status information of the EAS corresponding to the at least one EES.

13. The method according to any one of claims 7 to 12, wherein the method further comprises:
determining, by the second EES, the instantiation status corresponding to the first EAS based on the ACR type corresponding to the application, wherein the instantiation status of the first EAS comprises an instantiated state, or the instantiation status of the first EAS comprises an instantiable but not instantiated yet state.

14. The method according to claim 13, wherein the ACR type comprises a normal ACR type, and the instantiation status of the first EAS comprises the instantiated state; or
the ACR type comprises an ACR type for service continuity planning, and the instantiation status of the first EAS comprises the instantiable but not instantiated yet state.

15. The method according to any one of claims 7 to 14, wherein the information about the first EAS comprises at least one of the instantiation status information of the first EAS, identification information of the first EAS, and endpoint of the first EAS.

16. A communication method, comprising:
sending, by an edge enabler client EEC, a first message to a first EES, wherein the first message is used to obtain information about a first edge application server EAS or report the information about the first EAS, the first EAS is a target EAS of application context relocation ACR corresponding to an application, the first message comprises first indication information, and the first indication information is used to determine the first EAS; and
receiving, by the EEC, a second message from the first EES, wherein the second message comprises information about at least one EAS, and the information about the at least one EAS comprises the information about the first EAS.

17. The method according to claim 16, wherein the first indication information comprises at least one of the following information: an application context relocation ACR type corresponding to the application, indication information indicating that the ACR corresponding to the application is ACR for service continuity planning or normal ACR, indication information of an instantiation status of the first EAS, and first time information, and the first time information indicates execution time of the ACR for service continuity planning.

18. The method according to claim 16 or 17, wherein the method further comprises:
determining, by the EEC, the first EAS from the at least one EAS based on at least one of the following information: the ACR type, instantiation status information of the first EAS, and the information about the at least one EAS.

19. The method according to claim 16 or 17, wherein the information about the first EAS comprises second time information, the second time information indicates instantiation time of the first EAS, and the method further comprises:
determining, by the EEC, the first EAS from the at least one EAS based on the first time information and/or the second time information.

20. The method according to any one of claims 16 to 19, wherein the method further comprises:
sending, by the EEC, a third message to an edge configuration server ECS, wherein the third message comprises at least one of the following information: the first indication information and application information; and
receiving, by the EEC, first information from the ECS, wherein the first information comprises at least one of the following information: information about at least one EES, instantiation status information of an EAS corresponding to the at least one EES, and instantiation time information of the EAS corresponding to the at least one EES, and the at least one EES comprises the first EES.

21. The method according to claim 20, wherein the method further comprises:
determining, by the EEC, the first EES from the at least one EES based on at least one of the application information, the first indication information, the information about the at least one EES, and the instantiation status information of the EAS corresponding to the at least one EES.

22. The method according to any one of claims 16 to 21, wherein the method further comprises:
determining, by the EEC, the instantiation status corresponding to the first EAS based on the ACR type corresponding to the application, wherein the instantiation status of the first EAS comprises an instantiated state, or the instantiation status of the first EAS comprises an instantiable but not instantiated yet state.

23. The method according to claim 22, wherein the ACR type comprises a normal ACR type, and the instantiation status of the first EAS comprises the instantiated state; or
the ACR type comprises an ACR type for service continuity planning, and the instantiation status of the first EAS comprises the instantiable but not instantiated yet state.

24. A communication method, comprising:
receiving, by a first edge enabler server EES, a first message, wherein the first message is used to request information about a first edge application server EAS, the first message comprises first indication information, the first indication information is used to determine the first EAS, and the first EAS is a target EAS of application context relocation ACR corresponding to an application; and
sending, by the first EES, a second message, wherein the second message comprises information about at least one EAS, and the information about the at least one EAS comprises the information about the first EAS.

25. The method according to claim 24, wherein the first indication information comprises at least one of the following information: an application context relocation ACR type corresponding to the application, indication information indicating that the ACR corresponding to the application is ACR for service continuity planning or normal ACR, indication information of an instantiation status of the first EAS, and first time information, and the first time information indicates execution time of the ACR for service continuity planning.

26. The method according to claim 25, wherein the method further comprises:
determining, by the first EES, the first EAS based on the first indication information, wherein the instantiation status of the first EAS comprises an instantiated state, or the instantiation status of the first EAS comprises an instantiable but not instantiated yet state.

27. The method according to claim 26, wherein when the ACR type comprises a normal ACR type, or the first indication information comprises indication information indicating that the ACR corresponding to the application is the normal ACR, or the instantiation status of the first EAS comprises the instantiated state, the first EAS comprises an instantiated EAS; or
when the ACR type comprises an ACR type for service continuity planning, or the first indication information comprises indication information indicating that the ACR corresponding to the application is the ACR for service continuity planning, or the instantiation status of the first EAS comprises the instantiable but not instantiated yet state, the first EAS comprises an EAS that is instantiable but not instantiated yet.

28. The method according to claim 26, wherein the first indication information comprises the first time information, and determining, by the first EES, the first EAS based on the first indication information comprises:
determining, by the first EES, the first EAS based on the first time information and second time information, wherein the second time information indicates instantiation time of the first EAS, and the instantiation status of the first EAS comprises the instantiated state, or the instantiation status of the first EAS comprises the instantiable but not instantiated yet state.

29. The method according to any one of claims 24 to 28, wherein the first message is from a second EES or an edge enabler client EEC; and sending, by the first EES, the second message comprises:
sending, by the first EES, the second message to the second EES or the EEC.

30. A communication apparatus, comprising a unit configured to perform the method according to any one of claims 1 to 29.

31. A communication system, comprising at least one communication apparatus configured to perform the method according to any one of claims 1 to 29.

32. A computer-readable storage medium, wherein the computer-readable storage medium is configured to store a computer program, and when the computer program is run on a computer or a processor, the computer or the processor performs the method according to any one of claims 1 to 29.

33. A computer program product, wherein the computer program product comprises a computer program, and when the computer program product runs on a computer or a processor, the computer or the processor performs the method according to any one of claims 1 to 29.
